(19) Europäisches Patentamt
European Patent Office
Office européen des brevets

(11) **EP 3 824 343 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **19740575.6**

(22) Anmeldetag: **18.07.2019**

(51) Internationale Patentklassifikation (IPC):
**G02C 7/06** [(2006.01)]

(52) Gemeinsame Patentklassifikation (CPC):
**G02C 7/063; G02C 2202/12**

(86) Internationale Anmeldenummer:
**PCT/EP2019/069422**

(87) Internationale Veröffentlichungsnummer:
**WO 2020/016378 (23.01.2020 Gazette 2020/04)**

(54) **GLEITSICHT-BRILLENGLAS MIT RÄUMLICH VARIIERENDEM BRECHUNGSINDEX SOWIE VERFAHREN ZU DESSEN ENTWURF**

VARIFOCAL SPECTACLE LENS WITH A SPATIALLY VARYING REFRACTIVE INDEX

VERRE DE LUNETTES PROGRESSIF À INDICE DE RÉFRACTION VARIANT SPATIALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2018   EP 18184779**

(43) Veröffentlichungstag der Anmeldung:
**26.05.2021   Patentblatt 2021/21**

(73) Patentinhaber: **Carl Zeiss Vision International GmbH**
**73430 Aalen (DE)**

(72) Erfinder:
• **KELCH, Gerhard**
  **73434 Aalen (DE)**
• **MENKE, Christoph**
  **73447 Oberkochen (DE)**
• **WIETSCHORKE, Helmut**
  **73433 Aalen (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
WO-A1-99/13361         US-A1- 2003 117 578
US-A1- 2010 238 400   US-B2- 8 186 829

• YUKI SHITANOKI ET AL: "Application of Graded-Index for Astigmatism Reduction in Progressive Addition Lens", APPLIED PHYSICS EXPRESS, Bd. 2, 1. März 2009 (2009-03-01), Seite 032401, XP055392139, JP ISSN: 1882-0778, DOI: 10.1143/APEX.2.032401

**Beschreibung**

Die Erfindung betrifft ein Erzeugnis umfassend (a) ein Gleitsicht-Brillenglas oder (b) eine auf einem Datenträger in Form von computerlesbaren Daten befindliche Darstellung des Gleitsicht-Brillenglases mit Anweisungen für seine Herstellung durch ein additives Verfahren nach dem Oberbegriff der Patentansprüche 1 bis 4 sowie ein computerimplementiertes Verfahren zum Entwerfen eines Gleitsicht-Brillenglases nach dem Oberbegriff der Patentansprüche 7 und 8.

Gleitsicht-Brillengläser sind seit Jahrzehnten in der Brillenoptik bekannt und verbreitet. Wie Mehrstärken-Brillengläser (i.A. Zwei- und Dreistärkengläser) stellen sie dem Alterssichtigen (Presbyopen) eine zusätzliche optische Wirkung im unteren Teil des Brillenglases zum Betrachten naher Objekte, z.B. beim Lesen, zur Verfügung. Diese wird benötigt, da die Augenlinse mit zunehmendem Alter ihre Eigenschaft, auf nahe Objekte zu fokussieren, mehr und mehr einbüßt. Gleitsicht-Brillengläser bieten gegenüber diesen Mehrstärken-Brillengläsern den Vorteil, eine stufenlose Zunahme der optischen Wirkung vom Fernteil zum Nahteil bereitzustellen, so dass nicht nur in Ferne und Nähe, sondern auch in allen Zwischenentfernungen ein scharfes Sehen gewährleistet ist.

Gleitsicht-Brillengläser werden im Allgemeinen bisher aus einem Material mit konstanter Brechzahl hergestellt, d.h., die optische Wirkung des Brillenglases wird nur durch entsprechende Formgebung der beiden an Luft grenzenden Flächen (Vorder- bzw. objektseitige Fläche, sowie Rück- bzw. augenseitige Fläche) des Brillenglases festgelegt. Um die stufenlose Zunahme der optischen Wirkung in einem Gleitsicht-Brillenglas zu erzeugen, muss auf mindestens einer der beiden Glasflächen eine entsprechende kontinuierliche Änderung der Flächenkrümmung vorhanden sein. Differentialgeometrische Eigenschaften von Flächen, die mindestens zweimal stetig differenzierbar sind, führen jedoch unvermeidbar zu nicht erwünschten optischen Abbildungsfehlern bei Gleitsicht-Brillengläsern aus einem Material mit konstantem Brechungsindex.

Diese Eigenschaften werden auf den "Satz von Minkwitz" zurückgeführt (Minkwitz, G., "Über den Flächenastigmatismus bei gewissen symmetrischen Asphären.", Optica Acta, 10(3), Nr.3 Juli 1963, S.223-227). Minkwitz sagt aus, dass auf einer mindestens zweimal stetig differenzierbaren Fläche seitlich einer Nabelpunktlinie mit stetig zu- oder abnehmender Krümmung der Flächenastigmatismus sich doppelt so schnell ändert, wie die Krümmung entlang dieser Linie. In jedem Punkt der Fläche ist der Flächenastigmatismus der Betrag der Differenz der Hauptkrümmungen der Fläche in diesem Punkt multipliziert mit der Brechzahldifferenz vor und hinter der Fläche am Flächenpunkt. Zur Definition von Flächenastigmatismus und mittlerem Flächenbrechwert siehe Diepes H., Blendowske R., "Optik und Technik der Brille", 2. Auflage, Heidelberg 2005, S.256.

Dieser Flächenastigmatismus erzeugt in der optischen Wirkung der Brillenlinse für den Träger eine Unschärfe, die das Auge nicht ausgleichen kann. Damit sind alle Gleitsicht-Brillengläser, die nach der oben beschriebenen Art hergestellt wurden, mit Abbildungsfehlern (Restastigmatismus) seitlich des "Progressionskanal" genannten Bereichs scharfen Sehens im Übergang von Ferne zu Nähe behaftet. Genauer gesagt entspricht die Beziehung zwischen dem Anstieg des mittleren Flächenbrechwertes entlang der Nabelpunktlinie und dem dadurch indizierten seitlichen Flächenastigmatismus entsprechend dem Satz von Minkwitz weitgehend der Beziehung zwischen dem vertikalen dioptrischen Wirkungsanstieg im Gleitsicht-Brillenglas und dem dadurch indizierten seitlichen Anstieg des astigmatischen Fehlers (Restastigmatismus) für den Brillenträger im Progressionskanal. Der Progressionskanal ist dabei nach DIN EN ISO 13666:2012, Absatz 14.1.25 der Bereich eines Gleitsicht-Brillenglases, der scharfes Sehen für Entfernungen ermöglicht, die zwischen der Ferne und der Nähe liegen. Unter vertikalem dioptrischem Wirkungsanstieg versteht man den Anstieg der mittleren Wirkung des Brillenglases für den Brillenträger in der Progressionszone in vertikaler Richtung. Im Nahbereich wird die mittlere Wirkung des Fernbereichs plus der verordneten Addition erreicht. In jedem Durchblickpunkt des Gleitsichtbrillenglases ergibt sich für den Brillenträger in der entsprechenden Blickrichtung entlang des Hauptstrahls eine aus zwei Hauptschnittbrechwerten bestehende fokussierende Wirkung. Das arithmetische Mittel dieser Hauptschnittbrechwerte ist die mittlere Wirkung.

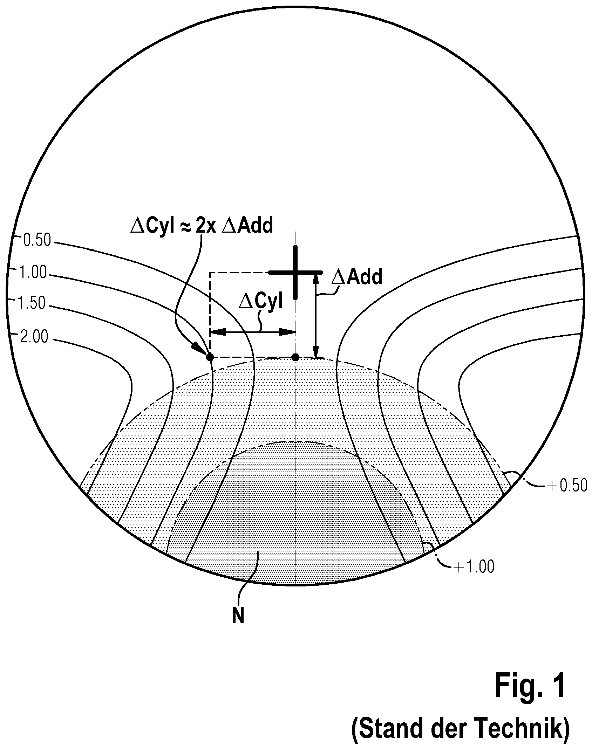

In der Mitte des Progressionskanals verläuft die Hauptblicklinie, welche die Gesamtheit aller Durchblickpunkte durch die Fläche bei der Blickbewegung des Auges auf Objektpunkte geradeaus vor dem Brillenträger von der Ferne zur Nähe darstellt. Die Fig. 1 illustriert diesen Zusammenhang. Das Symbol ΔAdd in der Zeichnung ist der Gradient der mittleren Wirkung in Richtung der Nabelpunktlinie. Das Symbol ΔCyl in der Zeichnung ist der Gradient des Astigmatismus. Das Symbol N weist auf den Verlauf der Nabelpunktlinie hin. Unter Astigmatismus ist vorliegend die astigmatische Abweichung von der für den Brillenträger verordneten astigmatischen Wirkung unter Berücksichtigung der Achslage zu verstehen. Die Berechnung von mittlerer Wirkung und astigmatischer Abweichung in einem Durchblickpunkt auf dem Brillenglas erfolgt im Brillenträgerstrahlengang. Dieser Strahlengang beschreibt den Lichtweg entlang des Hauptstrahls, der den vom Brillenträger angeblickten Objektpunkt mit dem Augendrehpunkt verbindet.

Damit ist ein einfacher Zusammenhang zwischen dem Wirkungsanstieg im Gleitsicht-Brillenglas und der Breite des Progressionskanals, in dem scharfes Sehen möglich ist, gegeben. Eine Überwindung dieser Gesetzmäßigkeit ist äußerst erstrebenswert, da ein breiterer Progressionskanal eine deutliche Verbesserung der Nutzbarkeit des Glases für das Sehen in mittlere Entfernungen bedeutet. Zum Satz von Minkwitz siehe auch Diepes H., Blendowske R. "Optik und Technik der Brille", 2. Auflage, Heidelberg 2005, S.257f.

Die WO 89/04986 A1 beschäftigt sich mit dem Einsatz von Materialien mit variablem Brechungsindex bei Gleitsicht-Brillengläsern. Sie nennt auf Seite 3 drei Möglichkeiten zur Verwendung eines variierenden Brechungsindex, nämlich

- Durch die Variation des Brechungsindex wird der Wirkungsanstieg entlang einer der geschwungenen Hauptblicklinie folgenden oder in einer Ebene liegenden, der Hauptblicklinie angepassten Linie erzeugt bzw. verstärkt.
  Als Hauptblicklinie wird dabei diejenige Linie auf der Vorderfläche des Brillenglases bezeichnet, die die Hauptdurchblickpunkte für das Sehen in die Ferne und in die Nähe miteinander verbindet und auf der die Durchstoßpunkte der Sehstrahlen für Zwischenentfernungen in Richtung "geradeaus" liegen. Die Hauptblicklinie ist eine im Fern- und im Nahteil angenähert senkrecht und im Zwischenteil gewunden verlaufende Linie.

- Durch den variierenden Brechungsindex wird der Astigmatismus entlang der Hauptblicklinie ganz oder teilweise behoben.

- Durch die Verwendung eines Gradientenmediums werden Korrekturen von Abbildungsfehlern seitlich des Hauptmeridians vorgenommen.

Denkt man sich die drei Effekte "Wirkungsanstieg entlang der Hauptblicklinie", "Beseitigung des Astigmatismus entlang der Hauptblicklinie" und "seitliche Korrekturen" hauptsächlich, teilweise oder nicht von der Variation des Brechungsindex getragen, dann ergeben sich $3^3 = 27$ Kombinationsmöglichkeiten, die sich alle mathematisch charakterisieren lassen.

Das auf Seite 2, vorletzter Abschnitt angegebene Ziel der WO 89/04986 A1 besteht darin, "dass es möglich ist, durch die Verwendung eines variierenden Brechungsindex bei der Herstellung der Linsenflächen so große Vorteile zu erzielen, dass sich insgesamt bei vergleichbaren Abbildungseigenschaften eine vereinfachte Herstellung ergibt."

Auf Seite 5 der WO 89/04986 A1 wird auch kurz auf den Satz von Minkwitz eingegangen:
"Wenn zusätzlich auch der Astigmatismus entlang des Hauptmeridians durch die Variation des Brechungsindex verringert wird, so bedeutet dies, dass auch die Einschränkung bei der Gestaltung des Brillenglases, dass der Flächenastigmatismus längs des Hauptmeridians bzw. der Hauptblicklinie klein sein soll, wegfällt, so dass für das erfindungsgemäße Brillenglas nicht dem Satz von Minkwitz unterworfen ist, und das Brillenglas unter anderen Gesichtspunkten wesentlich günstiger gestaltet werden kann."

Insgesamt wird in der WO 89/04986 A1 auf die einfachere und günstigere Herstellbarkeit der Brillengläser bei vergleichbaren Abbildungseigenschaften abgehoben. Die Erwähnung von verbesserten Abbildungseigenschaften auf Seite 12 oben bleibt im Ungefähren: "Ausdrücklich soll darauf hingewiesen werden, dass bei der Optimierung die Korrektur von Abbildungsfehlern nicht beachtet worden ist, und dass sich dennoch Gläser mit sehr guten Abbildungseigenschaften in den seitlichen Bereichen ergeben haben. Eine weitere Verbesserung der Abbildungseigenschaften in den Bereichen seitlich des Hauptmeridians erhält man durch weitere Optimierung der Indexfunktion. In den Beispielen sind keine Verbesserungen seitlich des Progressionskanals im Vergleich zu herkömmlichen Gläsern erkennbar."

Die WO 99/13361 A1 beschreibt ein sogenanntes "MIV"-Linsenobjekt, welches alle funktionellen Merkmale von Gleitsichtgläsern aufweisen soll, nämlich ein Fernteil, ein Nahteil und eine Progressionszone, deren Randbereiche aber frei von astigmatischen Aberrationen sein sollen. Dieses Dokument beschreibt, dass ein derartiges Linsenobjekt eine sphärische Vorder- und eine sphärische Rückfläche aufweisen kann. Das Linsenobjekt soll eine Progressionszone mit vom Fernteil zum Nahteil kontinuierlich zunehmendem Brechungsindex aufweisen. Mit einer derartigen Ausführung lassen sich allerdings in der Regel nicht alle gewünschten Additionen realisieren. Das Dokument führt daher aus: "Falls gewünscht, kann der Bereich von Zusätzen überbrückt werden, falls dies durch den einzigen variablen Brechungsindex unmöglich ist, auch durch Herstellen der Linsen mit einem Materialrohblock mit variablem Brechungsindex, wie oben beschrieben, und Bilden von Kurven mit variabler Geometrie wie die herkömmlicher progressiver Linsen, wodurch das Ergebnis erzielt wird, dass sie im Vergleich zu diesen letzteren eine viel höhere Wirkung aufweisen, da die Linse mit variierendem Brechungsindex in den verschiedenen Bereichen die gewünschte Addition unter Verwendung viel weniger differenzierter Kurven zwischen der Fernteilwirkung und der Nahteilwirkung mit einer Verringerung der Aberrationsfläche und einer Vergrößerung der Nutzsichtfläche bereitstellt."

Die US 2010/238400 A1 beschreibt jeweils aus mehreren Schichten bestehende Gleitsicht-Brillengläser. Wenigstens eine der Schichten kann einen variierenden Brechungsindex aufweisen, welcher bezüglich zweier orthogonal zueinander verlaufenden Meridianen beschrieben wird. Darüber hinaus kann zumindest eine der Flächen einer der Schichten eine progressive Flächengestalt aufweisen. Es ist beschrieben, dass der Brechungsindexverlauf in horizontaler Richtung zur Vollkorrektur der durch die Geometrie der Flächen verwendet werden kann.

Yuki Shitanoki et al: "Application of Graded-Index for Astigmatism Reduction in Progressive Addition Lens", Applied Physics Express, Bd. 2, 1. März 2009, Seite 032401 beschreibt durch Vergleich zweier mit Hilfe derselben Formschale abgegossener Gleitsicht-Brillengläser der Astigmatismus bei einem Gleitsicht-Brillenglas mit einem Brechungsindexgradienten gegenüber einem Gleitsicht-Brillenglas ohne einen Brechungsindexgradienten verringert werden kann.

Die EP 2 177 943 A1 beschreibt ein Verfahren zum Berechnen durch Optimierung eines optischen Systems, zum Beispiel einer ophthalmischen Linse, gemäß wenigstens einem Kriterium aus einer Liste von für den Seheindruck eines Probanden beeinflussenden Kriterien. Das Dokument schlägt vor, eine Kostenfunktion unter Berücksichtigung von Zielwerten und Kriteriumswerten zu minimieren. Es ist eine allgemeine Formel für eine derartige Kostenfunktion angegeben. Es werden u.a. die beiden Beispiele angegeben:

Abschnitt [0016]: "In einer Ausführungsform umfasst das zu optimierende arbeitende optische System mindestens zwei optische Oberflächen und die modifizierten Parameter sind mindestens die Koeffizienten der Gleichungen von zwei optischen Oberflächen des arbeitenden optischen Systems."

Abschnitt [0018]: "In einer Ausführungsform, in der das zu optimierende optische System mindestens zwei optische Oberflächen aufweist, wird die Modifikation des optischen Bearbeitungssystems so betrieben, dass zumindest der Index des arbeitenden optischen Systems modifiziert wird. Es ist möglich, eine Linse aus einem inhomogenen Material herzustellen, in dem sich ein Gradient im Brechungsindex befindet (bekannt als GRIN-Linse). Zum Beispiel kann die Verteilung des Index, der optimiert wird, axial oder radial sein und / oder kann von der Wellenlänge abhängen."

Die Aufgabe der vorliegenden Erfindung ist es, die Abbildungseigenschaften von Gleitsicht-Brillengläsern im Vergleich zum Stand der Technik deutlich zu verbessern. Dabei sollen insbesondere die Einschränkungen durch den Satz von Minkwitz reduziert und möglichst beseitigt werden.

Diese Aufgabe wird durch ein Erzeugnis mit den Merkmalen der Patentansprüche 1 bis 4 sowie ein Verfahren mit den Merkmalen des Patentspruchs 8 gelöst. Vorteilhafte Ausführungen und Weiterbildungen sind Gegenstand der Unteransprüche.

Konkret werden zur Lösung der Aufgabe Materialien mit variablem Brechungsindex (GRIN) eingesetzt. Eine Vereinfachung der Flächengeometrie wird dabei im Gegensatz zur WO 89/04986 A1 gerade nicht angestrebt.

Im Gegenteil, erfinderseits ist festgestellt worden, dass im Vergleich zum Stand der Technik wesentliche Verbesserungen der Abbildungsqualität nur durch simultane Optimierung der Verteilung der Brechzahl und der Gestalt einer Freiformfläche erreicht werden. Dies gilt besonders in den Bereichen seitlich des Progressionskanals.

Die Erfindung ist in den Patentansprüchen definiert.

Die Offenbarung umfasst folgende Alternativen:

(1) Der Brechungsindex ändert sich nur in einer ersten Raumdimension und in einer zweiten Raumdimension und ist in einer dritten Raumdimension konstant, wobei eine Verteilung des Brechungsindex in der ersten Raumdimension und der zweiten Raumdimension weder eine Punkt- noch eine Achsensymmetrie aufweist.

(2) Der Brechungsindex ändert sich in einer ersten Raumdimension und in einer zweiten Raumdimension und in einer dritten Raumdimension. Eine Verteilung des Brechungsindex in der ersten Raumdimension und der zweiten Raumdimension weist in allen Ebenen senkrecht zu der dritten Raumdimension weder eine Punkt- noch eine Achsensymmetrie auf.

(3) Der Brechungsindex ändert sich in einer ersten Raumdimension und in einer zweiten Raumdimension und in einer dritten Raumdimension. Eine Verteilung des Brechungsindex weist überhaupt keine Punkt- und keine Achsensymmetrie auf.

Die dritte Raumdimension im Fall (1) oder (2) verläuft in einer bevorzugten Ausführungsvariante in einer Richtung, die

- um nicht mehr als 5° von der Nullblickrichtung bei bestimmungsgemäßem Gebrauch differiert oder
- um nicht mehr als 10° von der Nullblickrichtung bei bestimmungsgemäßem Gebrauch differiert oder
- um nicht mehr als 20° von der Nullblickrichtung bei bestimmungsgemäßem Gebrauch differiert oder
- um nicht mehr als 5° von der Hauptblickrichtung bei bestimmungsgemäßem Gebrauch differiert oder
- um nicht mehr als 10° von der Hauptblickrichtung bei bestimmungsgemäßem Gebrauch differiert oder
- um nicht mehr als 20° von der Hauptblickrichtung bei bestimmungsgemäßem Gebrauch differiert oder
- um nicht mehr als 5° von der Richtung des Normalenvektors der Vorderfläche in der geometrischen Mitte des Gleitsicht-Brillenglases differiert oder
- um nicht mehr als 10° von der Richtung des Normalenvektors der Vorderfläche in der geometrischen Mitte des Gleitsicht-Brillenglases differiert oder
- um nicht mehr als 20° von der Richtung des Normalenvektors der Vorderfläche in der geometrischen Mitte des Gleitsicht-Brillenglases differiert oder
- um nicht mehr als 5° von der Richtung des Normalenvektors am prismatischen Messpunkt differiert oder
- um nicht mehr als 10° von der Richtung des Normalenvektors am prismatischen Messpunkt differiert oder

- um nicht mehr als 20° von der Richtung des Normalenvektors am prismatischen Messpunkt differiert oder
- um nicht mehr als 5° von der Richtung des Normalenvektors am Zentrierpunkt differiert oder
- um nicht mehr als 10° von der Richtung des Normalenvektors am Zentrierpunkt differiert oder
- um nicht mehr als 20° von der Richtung des Normalenvektors am Zentrierpunkt differiert.

Der prismatische Messpunkt ist nach DIN EN ISO 13666:2013-10 - 14.2.12 (bei einem Gleitsicht-Brillenglas oder einem Gleitsicht-Brillenglasblank) ein vom Hersteller angegebener Punkt auf der Vorderfläche, in dem die prismatischen Wirkungen des fertigen Glases bestimmt werden müssen. Die Definition des Zentrierpunkts findet sich in der DIN EN ISO 13666:2013-10 im Abschnitt 5.20.

Die Freiformfläche ist nach der Erfindung vorzugsweise eine solche im engeren Sinn entsprechend dem Abschnitt 2.1.2 der DIN SPEC 58194 vom Dezember 2015, nämlich eine in Freiformtechnologie gefertigte Brillenglasfläche, die im Rahmen der Grenzen der Differentialgeometrie mathematisch beschrieben wird und weder punkt- noch achsensymmetrisch ist.

Als eine wesentliche Verbesserung ist die Reduktion des Restastigmatismus seitlich des Progressionskanals anzusehen, so dass die Breite des Progressionskanals zunimmt. Diese Breite ist definiert durch eine Schranke des Restastigmatismus, die vom Brillenträger als störend empfunden wird. Diese Schranke liegt üblicherweise im Bereich zwischen 0,25 Dioptrien und 0,50 Dioptrien. Weiterhin kann auch der maximale Restastigmatismus im Zwischenbereich, vorzugsweise im horizontalen Abstand von 20 mm von der Hauptblicklinie, reduziert werden.

Diese wesentlichen Verbesserungen werden gerade auch für ein Gleitsichtglas erreicht, welches ein unsymmetrisches (optisches) Design besitzt, d.h. dessen Verteilung der astigmatischen und sphärischen Restfehler für den Brillenträger über das gesamte Brillenglas keine Achsensymmetrie besitzt, bedingt durch die Anpassung des Designs an die Konvergenzbewegung des Auge des Brillenträgers beim Blick in die Nähe.

Es ergibt sich nach der erfindungsgemäßen Optimierung ein Gleitsicht-Brillenglas, welches mindestens eine Freiformfläche und eine nicht konstante, im Allgemeinen unsymmetrische, Verteilung des Brechungsindexes im Glas aufweist.

Dieses Gleitsicht-Brillenglas kann die optischen Anforderungen des Brillenträgers gemäß der Verordnung nicht erfüllen, wenn man unter Beibehaltung der Geometrie der begrenzenden Flächen das GRIN-Material durch ein Material mit konstanter Brechzahl ersetzt.

Die Offenbarung umfasst:

a) ein Gleitsicht-Brillenglas und Anweisungen zum Gebrauch des Gleitsicht-Brillenglases oder

b) eine auf einem Datenträger in Form von computerlesbaren Daten befindliche Darstellung des Gleitsicht-Brillenglases und Anweisungen zum Gebrauch des Gleitsicht-Brillenglases oder

c) einen Datenträger mit einer virtuellen Repräsentation des Gleitsicht-Brillenglases in Form von computerlesbaren Daten und Anweisungen zum Gebrauch des Gleitsicht-Brillenglases oder

d) eine Darstellung des Gleitsicht-Brillenglases in Form eines computerlesbaren Datensignals und Anweisungen zum Gebrauch des Gleitsicht-Brillenglases, wobei

- das Gleitsicht-Brillenglas ein Substrat mit einer Vorderfläche und einer Rückfläche umfasst, welches aus einem Material mit räumlich variierenden Brechungsindex besteht,
- die Vorderfläche und/oder die Rückfläche eine Freiformflächengeometrie besitzt/besitzen,
- das Gleitsicht-Brillenglas einen Fern-Konstruktionsbezugspunkt und einen Nah-Konstruktionsbezugspunkt aufweist,
- das Gleitsicht-Brillenglas folgende optische Anforderungen erfüllt:

(1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
(2) zwischen Fern-Konstruktionsbezugspunkt und Nah-Konstruktionsbezugspunkt steigt die dioptrische Wirkung monoton stetig an
(3) es gibt einen Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt.

Es sind bei dieser Alternative die Freiformflächengeometrie der Vorderfläche und/oder der Rückfläche des Gleitsicht-Brillenglases und die räumliche Variation des Brechungsindex derart aufeinander abgestimmt, dass ein Vergleichs-Gleitsicht-Brillenglas mit gleicher Geometrie aber räumlich nicht variierendem Brechungsindex wenigstens eine der vorstehend genannten optischen Anforderungen (1) bis (3) nicht erfüllt.

Unter dem Ausdruck "auf einem Datenträger befindliche Darstellung eines Gleitsicht-Brillenglases" versteht man im Rahmen der vorliegenden Erfindung z.B. eine in einem Speicher eines Computers gespeicherte Darstellung des Gleitsicht-Brillenglases.

Anweisungen zum Gebrauch des Gleitsicht-Brillenglases bezeichnen insbesondere die Position und die Orientierung des Gleitsicht-Brillenglases bzw. der Brille, in die das Gleitsicht-Brillenglas eingesetzt wird, in Bezug auf die Augen und das Gesicht des Trägers während des Tragens der Brille. Die Gebrauchsbedingungen lassen sich bspw. durch den Vorneigungswinkel (DIN ISO 13666:2013-10, Abschnitt 5.18), den Fassungsscheibenwinkel (DIN ISO 13666:2013-10, Abschnitt 17.3) und den Hornhaut-Scheitelabstand (DIN ISO 13666:2013-10, Abschnitt 5.27) angeben. Typische Werte für den Vorneigungswinkel liegen zwischen -20 Grad und +30 Grad, typische Werte für den Hornhaut-Scheitelabstand liegen im Bereich zwischen 5 mm und 20 mm und typische Werte für den Fassungsscheibenwinkel liegen im Bereich von -5 Grad bis +30 Grad. Neben dem Vorneigungswinkel, dem Fassungsscheibenwinkel und dem Hornhaut-Scheitelabstand gehen in die Gebrauchsbedingungen in der Regel auch der Pupillenabstand gemäß DIN ISO 13666:2013-10, Abschnitt 5.29, also der Abstand zwischen den Mittelpunkten der Pupillen für den Fall, dass die Augen bei Blickrichtung geradeaus ein unendlich entferntes Objekt fixieren, die Zentrierdaten, also die zur Zentrierung des Brillenglases vor dem Auge nötigen Maße und Abstände, und das Objektabstandsmodell, welches festlegt, für welchen Objektabstand ein bestimmter Punkt auf der Brillenglasoberfläche optimiert ist, ein.

Nach DIN ISO 13666:2013-10, Abschnitt 5.18 ist der Vorneigungswinkel der Winkel in der Vertikalebene zwischen der Normale zur Vorderfläche eines Brillenglases in dessen Mittelpunkt nach Kastensystem und der Fixierlinie des Auges in Primärposition, die üblicherweise als horizontal angenommen wird.

Nach DIN ISO 13666:2013-10, Abschnitt 17.3 ist der Fassungsscheibenwinkel der Winkel zwischen der Fassungsebene und der rechten bzw. linken Scheibenebene.

Nach DIN ISO 13666:2013-10, Abschnitt 5.27 ist der Hornhaut-Scheitelabstand der Abstand zwischen der Rückfläche des Brillenglases und dem Apex der Hornhaut gemessen in Blickrichtung senkrecht zur Fassungsebene.

Nach DIN ISO 13666:2013-10, Abschnitt 17.1 ist die Scheibenebene die Ebene tangential zur Vorderfläche einer in die Brillenfassung eingearbeiteten Demooder Stütz-Scheibe in deren geometrischen Scheibenmittelpunkt.

Nach DIN ISO 13666:2013-10, Abschnitt 17.2 ist die Fassungsebene die Ebene, die durch die beiden vertikalen Mittellinien der rechten und der linken Scheibenebene verläuft.

Die Darstellung des Gleitsicht-Brillenglases kann insbesondere eine Beschreibung der geometrischen Gestalt und des Mediums des Gleitsicht-Brillenglases umfassen. Eine derartige Darstellung kann z.B. eine mathematische Beschreibung der Vorderfläche, der Rückfläche, der Anordnung dieser Flächen zueinander (einschließlich der Dicke) und der Randbegrenzung des Gleitsicht-Brillenglases sowie der Brechzahlverteilung des Mediums, aus dem das Gleitsicht-Brillenglas bestehen soll, umfassen. Die Darstellung kann in kodierter oder gar in verschlüsselter Form vorliegen. Unter Medium ist hier das Material/die Materialien bzw. der Stoff gemeint, aus dem das Gleitsicht-Brillenglas gefertigt ist. Das Gleitsicht-Brillenglas kann auch aus mehreren Schichten bestehen, z.B. auch aus einem Dünnstglas mit einer Dicke zwischen 10 $\mu$m und 500 $\mu$m und darauf aufgebrachtem Kunststoff.

Die dioptrische Wirkung ist nach Abschnitt 9.3 DIN EN ISO 13666:2013-10 der Sammelbegriff für die fokussierende und die prismatische Wirkung eines Brillenglases. Sie umfasst demnach regelmäßig die aus sphärischer Wirkung, zylindrischer Wirkung, Achslage der zylindrischen Wirkung und Addition bestehenden Daten zur dioptrischen Wirkung, die zur Korrektur der Fehlsichtigkeit des Brillenträgers nötig sind. In den Messpunkten, nämlich den Konstruktionsbezugspunkten nach DIN EN ISO 13666:2013-10 des Gleitsicht-Brillengases müssen die Messwerte gemäß den nach der Norm DIN 8980-2:2004 festgelegten Toleranzen eingehalten werden. Dies soll auch für die rezeptierten Wirkungen für den Brillenträger in den Bezugspunkten gelten. Der Verlauf dieses stetigen Anstiegs sowie die Progressionslänge werden durch die Auswahl des Glastyps (Glasdesigns) durch den Brillenträger festgelegt.

Unter Addition (Nahzusatz) versteht man nach 14.2.1 der DIN EN ISO 13666:2013-10 die Differenz zwischen dem Scheitelbrechwert des Nahteiles und dem Scheitelbrechwert des Fernteiles gemessen mit festgelegten Verfahren. 11.1 der DIN EN ISO 13666:2013-10 definiert ein Brillenglas mit sphärischer Wirkung als ein Brillenglas, das ein paraxiales, paralleles Lichtbündel in einem einzelnen Brennpunkt vereinigt. Kapitel 12.1 der Norm legt ein Brillenglas mit astigmatischer Wirkung als ein Brillenglas, das ein paraxiales, paralleles Lichtbündel in zwei getrennten, zueinander senkrecht stehenden Brennlinien vereinigt, und das daher nur in den beiden Hauptschnitten einen Scheitelbrechwert besitzt, fest. Nach 11.2 ist der sphärische Brechwert bzw. die Sphäre der Wert für den bildseitigen Scheitelbrechwert eines Brillenglases mit sphärischer Wirkung oder Scheitelbrechwert in einem der beiden Hauptschnitte eines Brillenglases mit astigmatischer Wirkung, abhängig vom gewählten Bezugs-Hauptschnitt. 12.5 dieser Norm definiert die Zylinderstärke oder den Zylinder als positiv oder negativ genommene astigmatische Differenz, abhängig davon, welcher Hauptschnitt als Bezug gewählt wird.

In einer zweiten Alternative lässt sich das erfindungsgemäße Gleitsicht-Brillenglas auch wie folgt charakterisieren:
Für das erfindungsgemäße Gleitsicht-Brillenglas mit nur einer Freiformfläche kann die Brechzahl des Gleitsicht-Brillenglases an der Stelle der Hauptblicklinie auf der Vorderfläche oder ggf. auf der Rückfläche bestimmt werden, an dem im Gleitsicht-Brillenglas der Brillenträger den halben Wirkungsanstieg erfährt.

Unter Hauptblicklinie versteht man die Gesamtheit aller Durchblickpunkte durch eine Brillenglas-Fläche bei der Blickbewegung des Auges auf Objektpunkte geradeaus vor dem Brillenträger von der Ferne zur Nähe. Die Hauptblicklinie verläuft regelmäßig in der Mitte des Progressionskanals.

Mit Hilfe dieser Brechzahl an der Hauptblicklinie auf der Freiformfläche lässt sich dann mittels der Krümmungsradien der Freiformfläche eine Verteilung des Flächenastigmatismus mit dieser konstanten Brechzahl für die Freiformfläche berechnen.

Für ein Gleitsicht-Brillenglas basierend auf einem Substrat aus einem Material konstanter Brechzahl nach dem Stand der Technik mit gleicher Lage der Freiformfläche und gleicher gegenüber liegender Fläche, das für die gleiche dioptrische Wirkung und die gleichen Gebrauchsbedingungen optimiert wurde und auch die gleiche Wirkungsverteilung für den Brillenträger aufweist, lässt sich auf die gleiche Weise eine Flächenastigmatismusverteilung der Freiformfläche ermitteln (berechnet mit der Brechzahl, die auch für das erfindungsgemäße Gleitsicht-Brillenglas verwendet wurde).

Bedingt durch die verbesserten Abbildungseigenschaften im Progressionskanal wird das erfindungsgemäße Gleitsicht-Brillenglas dann in einem Bereich um die Hauptblicklinie im Zwischenbereich erhöhte Flächenastigmatismuswerte aufweisen.

Diese werden um mindestens 0,25 dpt bis Addition / 3 dpt über den entsprechenden Flächenastigmatismuswerten des Gleitsicht-Brillenglases nach dem Stand der Technik liegen, insbesondere falls das Gleitsicht-Brillenglas nach dem Stand der Technik ähnliche astigmatische Abweichungen für den Brillenträger entlang der Hauptblicklinie im Zwischenteil besitzt.

Der Vergleichsbereich kann dabei eine horizontale Ausdehnung beiderseits der Hauptblicklinie von bis zu 3 mm, 5 mm oder sogar 10 mm besitzen und vertikal mindestens den Bereich umfassen, in dem die Zusatzwirkung an der Hauptblicklinie für den Brillenträger zwischen 0,25 * Addition und 0.75 * Addition ansteigt.

Anders ausgedrückt besteht der Gegenstand in einem Erzeugnis umfassend

a) ein Gleitsicht-Brillenglas und Anweisungen zum Gebrauch des Gleitsicht-Brillenglases oder
b) eine auf einem Datenträger befindliche Darstellung des Gleitsicht-Brillenglases in Form von computerlesbaren Daten und Anweisungen zum Gebrauch des Gleitsicht-Brillenglases oder
c) einen Datenträger mit einer virtuellen Repräsentation des Gleitsicht-Brillenglases in Form von computerlesbaren Daten und Anweisungen zum Gebrauch des Gleitsicht-Brillenglases oder
d) eine Darstellung des Gleitsicht-Brillenglases in Form eines computerlesbaren Datensignals und Anweisungen zum Gebrauch des Gleitsicht-Brillenglases, wobei

- das Gleitsicht-Brillenglas ein Substrat mit einer Vorderfläche und einer Rückfläche umfasst, welches aus einem Material mit räumlich variierenden Brechungsindex besteht, wobei die Vorderfläche eine Vorderflächengeometrie und die Rückfläche eine Rückflächengeometrie aufweisen, wobei
- die Vorderflächengeometrie und/oder die Rückflächengeometrie eine Freiformflächengeometrie ist/sind,
- das Gleitsicht-Brillenglas einen Fern-Konstruktionsbezugspunkt und einen Nah-Konstruktionsbezugspunkt aufweist
- das Gleitsicht-Brillenglas folgende optische Anforderungen erfüllt:

(1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
(2) zwischen Fern-Konstruktionsbezugspunkt und Nah-Konstruktionsbezugspunkt steigt die dioptrische Wirkung monoton stetig an
(3) es gibt einen Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt.

Für den Fall, dass die Vorderfläche des Gleitsicht-Brillenglases eine Freiformflächengeometrie besitzt, ist die Freiformflächengeometrie der Vorderfläche gegenüber einem Vergleichs-Gleitsicht-Brillenglas mit gleicher Rückflächengeometrie, mit gleichem dioptrischen Wirkungsverlauf und gleichem Restastigmatismus für die Brillenträgerstrahlverläufe durch die Hauptblicklinie basierend auf den Anweisungen zum Gebrauch des Gleitsicht-Brillenglases und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert. Die modifizierte Freiformflächengeometrie der Vorderfläche des Gleitsicht-Brillenglases und die räumliche Variation des Brechungsindex sind derart aufeinander abgestimmt, dass für dieses Gleitsicht-Brillenglas ein erster rechnerisch ermittelter Wert des Flächenastigmatismus der Vorderfläche an der Stelle, durch die der zugehörige Brillenträgerstrahlengang durch die Stelle auf der Hauptblicklinie verläuft, an dem dieses Gleitsicht-Brillenglas die Hälfte des gesamten mittleren Wirkungsanstiegs erfährt, größer als ein zweiter, für das Vergleichs-Gleitsicht-Brillenglas aus einem Material mit räumlich nicht variierendem Brechungsindex rechnerisch ermittelter Wert des Flächenastigmatismus der Vorderfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt.

Für den Fall, dass die Rückfläche des Gleitsicht-Brillenglases eine Freiformflächengeometrie besitzt, ist die Freiformflächengeometrie der Rückfläche gegenüber einem Vergleichs-Gleitsicht-Brillenglas mit gleicher Vorderflächengeometrie, mit gleichem dioptrischen Wirkungsverlauf und gleichem Restastigmatismus für die Strahlverläufe durch die Hauptblicklinie basierend auf den Anweisungen zum Gebrauch des Gleitsicht-Brillenglases und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Rückfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert. Weiterhin sind die modifizierte Freiformflächengeometrie der Rückfläche des Gleitsicht-Brillenglases und die räumliche Variation des Brechungsindex derart aufeinander abgestimmt, dass für dieses Gleitsicht-Brillenglas ein erster rechnerisch ermittelter Wert des Flächenastigmatismus der Rückfläche an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer, als ein zweiter, für ein das Vergleichs-Gleitsicht-Brillenglas mit aus einem Material mit räumlich nicht variierendem Brechungsindex rechnerisch ermittelter Wert des Flächenastigmatismuswert der Rückfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt.

Die vorstehend angegebenen Stellen auf der Hauptblicklinie entsprechen also dem Ort halber Addition.

Der erste rechnerisch ermittelte Flächenastigmatismus wird auf Basis eines konstanten Brechungsindex berechnet, der einen Wert aufweist, der dem Wert des Brechungsindex des Substrats an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt.

Die Fläche mit der Freiformflächengeometrie des Vergleichs-Gleitsicht-Brillenglases weist die gleiche Lage wie das erfindungsgemäße Gleitsicht-Brillenglas auf. Anders ausgedrückt: Ist bei dem erfindungsgemäßen Gleitsicht-Brillenglas die Freiformfläche die Vorderfläche, so gilt dies auch für das Vergleichs-Gleitsicht-Brillenglas. Ist bei dem erfindungsgemäßen Gleitsicht-Brillenglas die Freiformfläche die Rückfläche, so gilt dies auch für das Vergleichs-Gleitsicht-Brillenglas.

Das erfindungsgemäße Gleitsicht-Brillenglas und das Vergleichs-Gleitsicht-Brillenglas sollen darüber hinaus auch eine der Freiformfläche gegenüberliegende Fläche mit übereinstimmender Geometrie aufweisen.

Auch der dioptrische Wirkungsverlauf längs der Hauptblicklinie soll bei dem erfindungsgemäßen Gleitsicht-Brillenglas und dem Vergleichs-Gleitsicht-Brillenglas gleich sein.

Der Brechungsindex bzw. die Brechzahl des Vergleichs-Gleitsicht-Brillenglas soll gerade dem Wert entsprechen, welcher zur Berechnung des Flächenastigmatismus der Freiformfläche des erfindungsgemäßen Gleitsicht-Brillenglases verwendet wurde. Demnach soll der Brechungsindex einen Wert aufweisen, der dem Wert des Brechungsindex des Substrats an der Stelle der Hauptblicklinie auf der Vorderfläche (wenn die Vorderfläche eine Freiformfläche ist) oder auf der Rückfläche (wenn die Rückfläche eine Freiformfläche ist) entspricht, an dem das erfindungsgemäße Gleitsicht-Brillenglas mit dem Substrat aus dem Material mit räumlich variierendem Brechungsindex die Hälfte des gesamten dioptrischen Wirkungsanstiegs ist.

Die vorstehend angegebene Aufgabe wird durch den Gegenstand der Patentansprüche vollumfänglich gelöst.

Eine Optimierung des erfindungsgemäßen Glases kann dabei z.B. von einem Design eines bestehenden optimierten Gleitsicht-Brillenglases nach dem Stand der Technik mit konstanter Brechzahl für die konkrete Verordnung, die konkreten Gebrauchsbedingungen (Vorneigung, Fassungsscheibenwinkel, Hornhautscheitelabstand, Zentrierung, ...) und den konkreten Dicken dieses Glases ausgehen.

Als Design bezeichnen wir hierbei die Verteilung der sphärischen und astigmatischen Restfehler für den Brillenträger über das gesamte Glas. Für dieses Gleitsicht-Brillenglas lässt sich eine Hauptblicklinie entsprechend der in der Beschreibungseinleitung angegebenen Definition bestimmen, für die insbesondere im Zwischenteil geringe astigmatische Restfehler erzielt werden können. Der Zwischenteil ist der gesamte Übergangsbereich zwischen Fernteil (Bereich für das Sehen in die Ferne, siehe Abschnitt 14.1.1 der DIN EN ISO 13666:2013-10, Abschnitt) und Nahteil (Bereich für das Sehen in der Nähe, siehe Abschnitt 14.1.3 der DIN EN ISO 13666:2013-10). Die DIN EN ISO 13666:2013-10 definiert in Abschnitt 14.1.2 als Zwischenteil den Teil eines Dreistärken-Brillenglases, das die dioptrische Wirkung für das Sehen in eine Entfernung besitzt, die zwischen Ferne und Nähe liegt. Vorliegend wird diese Definition erweitert.

Allerdings werden die astigmatischen Restfehler neben der Hauptblicklinie wegen dem Gesetz von Minkwitz in horizontaler Richtung ansteigen (bedingt durch den dioptrischen Wirkungsanstieg in vertikaler Richtung).

Ziel der Erfindung ist es, diese sphärischen und astigmatischen Restfehler, insbesondere die astigmatischen Restfehler neben der Hauptblicklinie (d.h. im zentralen Bereich des Zwischenteils) zu reduzieren.

Ausgehend von diesem Design lässt sich ein neues Zieldesign erzeugen, das die bisherige Verteilung der sphärischen und astigmatischen Fehler enthält, die aber speziell im zentralen Zwischenteil reduziert werden. Vorzugsweise werden dabei die astigmatischen Restfehler in einem Bereich um die Hauptblicklinie (z.B. der Bereich mit einem Abstand von 5, 10 bis 20 mm von der Hauptblicklinie) verringert, z.B. indem sie mit einen Faktor von 0,5 bis 0,8 multipliziert werden, um zu einem verbesserten Zieldesign zu kommen.

Das Zieldesign kann z.B. auch durch die Vorgabe von optischen, insbesondere sphärischen und astigmatischen Restfehlern an vielen Punkten festgelegt werden, die über die Vorderfläche des gesamten Glases verteilt sind. Dabei kann es Festlegungen für die Entfernungen der Objekte geben, für die die Wirkungen bzw. sphärischen und astigmatischen Restfehler für den Brillenträger beim Blick durch das Glas bestimmt werden. Darüber hinaus kann es Vorgaben für die Flächenkrümmungen an weiteren Punkten auf der Gleitsichtfläche, Dickenforderungen (insbesondere in der geometrischen Mitte und am Rand des Gleitsichtglases) und prismatische Forderungen an weiteren Punkten geben.

Jedem dieser optischen und geometrischen Vorgaben $v_{ij}$ kann an jedem der genannten Punkte Pi eine individuelle Gewichtung $w_{ij}$ zugeordnet werden. Bestimmt man für ein Ausgangsglas (z.B. das für die konstante Brechzahl optimierte Gleitsichtglas) die Restfehler, Flächenkrümmungen, prismatische Wirkungen und Dicken $r_{ij}$ für die Vorgabe ij an dem Punkt Pi, so kann man damit einen Gesamtfehler G

$$G = \sum_i \sum_j (w_{ij} * (r_{ij} - v_{ij}))^2$$

bestimmen. Dieser von den optischen und geometrischen Glaseigenschaften abhängige Funktionswert G kann mittels bekannter mathematischer Methoden durch simultane Änderung der Flächengeometrie und der Brechzahlverteilung minimiert werden. Auf diese Weise erhält man ein Gleitsichtglas mit verbesserten Eigenschaften bzgl. der zuvor festgesetzten Forderungen.

Alternativ kann für die Optimierung des Gleitsichtglases mit einem Material mit variabler Brechzahl auch das ursprüngliche Zieldesign herangezogen werden, das heißt das Zieldesign, das für die Optimierung des Glases mit konstanter Brechzahl verwendet wurde.

Dabei können die bei der Optimierung mit dem ursprünglichen Design verwendeten Gewichtungen verwendet bzw. auch verändert werden. Insbesondere kann die Gewichtung für die astigmatischen und sphärischen Restfehler im Progressionskanal erhöht bzw. die Zielvorgaben für die astigmatischen oder sphärischen Restfehler verringert werden, um verbesserte Eigenschaften des Gleitsichtglases im Progressionsbereich zu erzielen. Eine Erhöhung der Gewichtung im Progressionskanal ist dabei aber nur sinnvoll, falls die astigmatischen und sphärischen Fehler des optimierten Glases mit einem Material mit konstanter Brechzahl nicht schon mit den Vorgaben des (neuen) Zieldesigns übereinstimmen.

Falls das ursprüngliche Design vom Brillenträger bereits akzeptiert wurde, erhält man mit diesem Vorgehen auf jeden Fall ein verträglicheres Design für den Brillenträger, da die optischen Restfehler mit dem neuen Design reduziert werden. Insgesamt erreicht man ein neues verbessertes Zieldesign, das mit einem Material mit konstanter Brechzahl nicht erreichbar ist, aber mit diesem Zieldesign und durch simultane Optimierung der Gestalt der Freiformflächen und der Verteilung der Brechzahl für ein Material mit nichtkonstanter Brechzahl sich ein verbessertes Gleitsichtglasdesign erzielen lässt, das insbesondere einen breiteren Progressionskanal, geringere maximale astigmatische Restfehler im Zwischenbereich und damit auch eine geringere Verzeichnung im Zwischenbereich aufweist.

Das erfindungsgemäße computerimplementierte Verfahren zum Entwerfen eines erfindungsgemäßen Gleitsicht-Brillenglases, welches ein Substrat mit einer Vorderfläche und einer Rückfläche umfasst, welches aus einem Material mit räumlich variierenden Brechungsindex besteht, dessen Vorderfläche und/oder dessen Rückfläche eine Freiformflächengeometrie besitzt/besitzen, welches einen Fern-Konstruktionsbezugspunkt und einen Nah-Konstruktionsbezugspunkt aufweist und welches folgende optische Anforderungen erfüllt:

(1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004

(2) einen monoton stetigen Anstieg der verordneten dioptrischen Wirkung zwischen Fern-Konstruktionsbezugspunkt und Nah-Konstruktionsbezugspunkt auf einer Hauptblicklinie

(3) einen Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt,
ist dadurch gekennzeichnet, dass

(i) die Freiformflächengeometrie der Vorderfläche und/oder der Rückfläche des Gleitsicht-Brillenglases und die räumliche Variation des Brechungsindex derart aufeinander abgestimmt werden, dass ein Vergleichs-Gleitsicht-Brillenglas mit gleicher Geometrie aber basierend auf einem Substrat aus einem Material mit räumlich nicht variierendem Brechungsindex wenigstens eine der optischen Anforderungen (1) bis (3) nicht erfüllt und gegenüber dem Vergleichs-Gleitsicht-Brillenglas eine Reduktion des Restastigmatismus seitlich des Progressionskanals vorliegt dergestalt, dass die Breite des Progressionskanals zunimmt, wobei diese Breite definiert ist durch eine Schranke des Restastigmatismus im Bereich zwischen 0,25 Dioptrien und 0,50 Dioptrien, oder dass

(ii) die Freiformflächengeometrie der Vorderfläche und/oder der Rückfläche des Gleitsicht-Brillenglases und die räumliche Variation des Brechungsindex derart aufeinander abgestimmt werden, dass für dieses Gleitsicht-Brillenglas ein erster rechnerisch ermittelter Wert des Flächenastigmatismus der Fläche mit der Freiformflächengeometrie an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für ein Vergleichs-Gleitsicht-Brillenglas aus einem Material mit räumlich nicht variierendem Brechungsindex rechnerisch ermittelter Wert des Flächenastigmatismus der Fläche mit der Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt, und wobei das Vergleichs-Gleitsicht-Brillenglas eine gleiche Lage der Fläche mit der Freiformflächengeometrie und eine gleiche Geometrie der gegenüber liegenden Fläche, einen gleichen dioptrischen Wirkungsverlauf längs der Hauptblicklinie aufweist und der Brechungsindex einen Wert aufweist, der dem Wert des Brechungsindex des Substrats an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt.

Die vorstehend angegebene Aufgabe wird durch diese beiden Alternativen vollumfänglich gelöst.
Die Erfindung bezieht sich auch auf ein Verfahren zum Herstellen eines Gleitsicht-Brillenglases nach einem der vorangehend beschriebenen Erzeugnisse oder eines unter Verwendung eines Verfahrens der vorstehend beschriebenen Art entworfenen Gleitsicht-Brillenglases durch ein additives Verfahren.

Additive Verfahren sind Verfahren, bei denen das Gleitsicht-Brillenglas sequentiell aufgebaut wird. Insbesondere ist in diesem Zusammenhang bekannt, dass insbesondere sogenannte digitale Fabrikatoren Fertigungsmöglichkeiten für nahezu beliebige Strukturen bieten, die mit den klassischen abrasiven Verfahren nicht oder nur schwer realisierbar sind. Innerhalb der Maschinenklasse der digitalen Fabrikatoren stellen die 3D-Drucker die wichtigste Teilklasse der additiven, also anhäufenden, aufbauenden Fabrikatoren dar. Die wichtigsten Techniken des 3D-Druckens sind das selektive Laserschmelzen (SLM) und das Elektronenstrahlschmelzen für Metalle und das selektive Lasersintern (SLS) für Polymere, Keramik und Metalle, die Stereolithografie (SLA) und das Digital Light Processing für flüssige Kunstharze und das Multijet- oder Polyjet-Modeling (z.B. Tintenstrahldrucken) sowie das Fused Deposition Modeling (FDM) für Kunststoffe und teilweise Kunstharze. Weiter bekannt ist auch ein Aufbau mit Hilfe von Nanoschichten, wie dies z.B. unter http://peaknano.com/wp-content/uploads/PEAK-1510-GRINOptics-Overview.pdf, heruntergeladen am 12.1.2017 beschrieben ist.
Ausgangsmaterialien für die Fertigung mittels 3D-Druck sowie Möglichkeiten für das 3D-Fertigungsverfahren selbst entnimmt man z.B. der europäischen Patentanmeldung Nr. 16195139.7.
Eine Weiterbildung der Erfindung besteht in einem Verfahren zum Herstellen eines Gleitsicht-Brillenglases umfassend ein Verfahren zum Entwerfen eines Gleitsicht-Brillenglases wie oben beschrieben und Fertigen des Gleitsicht-Brillenglases nach dem Entwurf.
Das Fertigen des Gleitsicht-Brillenglases nach dem Entwurf kann erfindungsgemäß durch ein additives Verfahren erfolgen.
Eine andere Weiterbildung der Erfindung besteht in einem Computer mit einem Prozessor, der eingerichtet ist, ein Verfahren zum Entwerfen eines Gleitsicht-Brillenglases nach der oben beschriebenen Art auszuführen.
Die Erfindung wird nachfolgend anhand der Zeichnung näher beschrieben. Es zeigen:

Figur 1    eine Graphik mit einer Iso-Restastigmatismusverteilung eines Gleitsicht-Brillenglases mit einem Substrat aus einem Material mit konstanter Brechzahl zur Demonstration des Satzes von Minkwitz (Stand der Technik)

Figur 2    optische Eigenschaften eines Gleitsicht-Brillenglases mit einem Substrat aus einem Material mit konstanter Brechzahl von n=1,60 (Stand der Technik)

a) mittlere Wirkung
b) Restastigmatismus
c) mittlerer Flächenbrechwert
d) Flächenastigmatismus

Figur 3      optische Eigenschaften eines erfindungsgemäßen Gleitsicht-Brillenglases mit einem Substrat aus einem Material mit variierender Brechzahl

         a) mittlere Wirkung
         b) Restastigmatismus
         c) mittlerer Flächenbrechwert bezogen auf eine Brechzahl von n=1,60
         d) Flächenastigmatismus bezogen auf eine Brechzahl von n=1,60
         e) Brechzahlverteilung
         f) Fringe-Zernike-Koeffizienten der Brechzahlverteilung

Figur 4      optische Eigenschaften eines Vergleichs-Gleitsicht-Brillenglases mit derselben Geometrie wie das erfindungsgemäße Gleitsicht-Brillenglas nach der Figur 3, gerechnet basierend auf einem Substrat aus einem Material mit konstanter Brechzahl von n=1,60

         a) mittlere Wirkung
         b) Restastigmatismus

Es wird bei dem nachfolgend beschriebenen Ausführungsbeispiel von folgenden Anforderungen ausgegangen:

     Sphärische Wirkung: Sph=0,00 D
     Zylindrische Wirkung: Zyl=0,00 D
     Nahzusatz: Add=2,50 D
     Progressionslänge: L=14 mm
     Vorneigung: 9 Grad
     Fassungsscheibenwinkel: 5 Grad
     Abstand zum Augendrehpunkt: 25,5 mm
     Objektabstand Nähe: 380 mm
     Vorderfläche sphärisch mit Radius R = 109,49 mm
     Rückseite Freiformfläche
     Mittendicke 2,55 mm

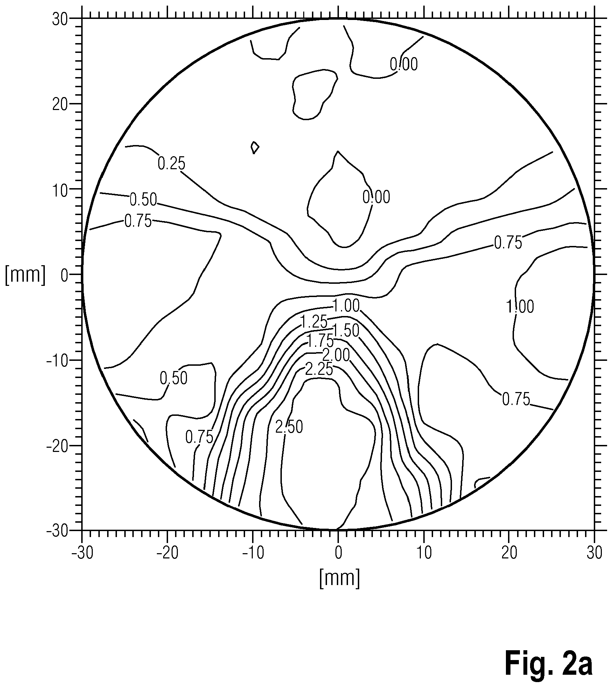

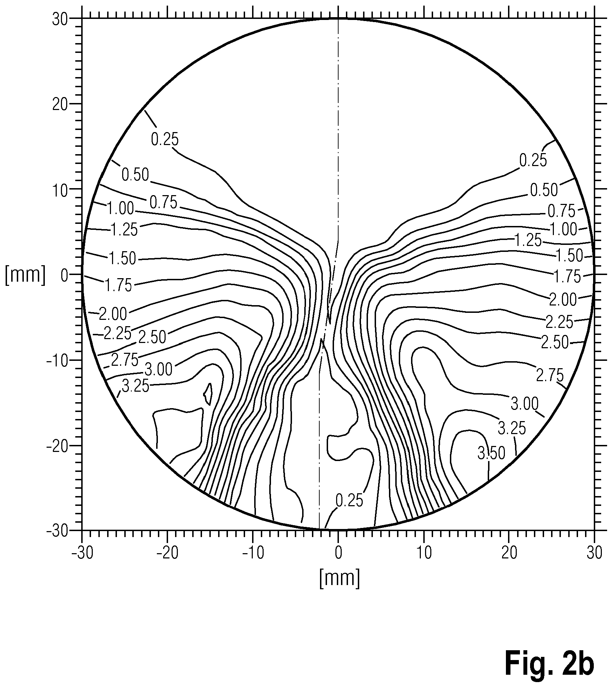

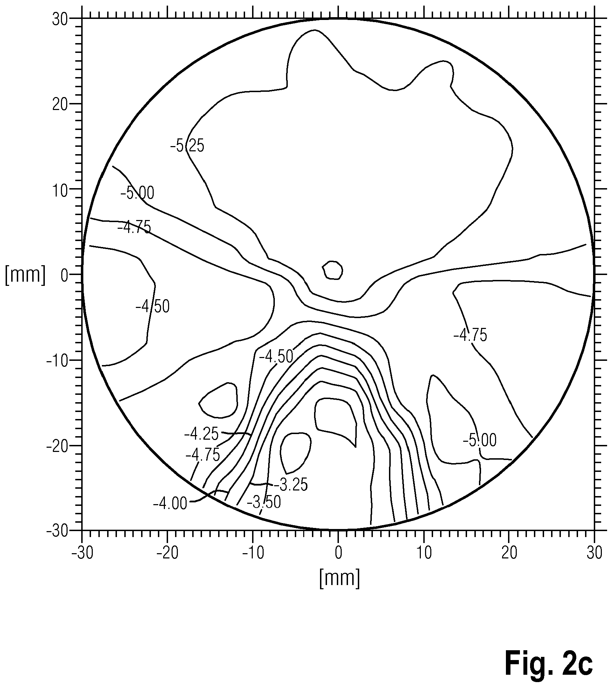

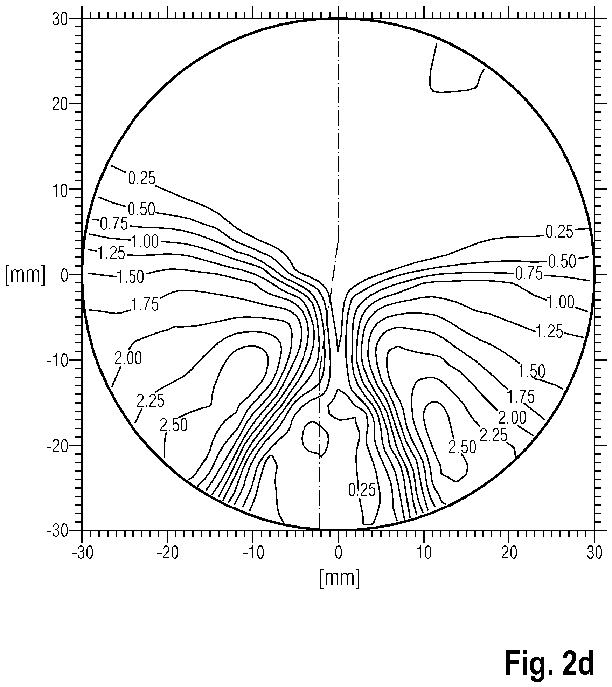

Die Figur 2 zeigt optische Eigenschaften eines Gleitsicht-Brillenglases mit einem Substrat aus einem Material mit konstanter Brechzahl von n=1,60 nach dem Stand der Technik. Der Figur 2a) entnimmt man die mittlere Wirkung. Der Brillenträger erhält beim Blick horizontal geradeaus (d.h. für einen Durchblickpunkt durch das Glas von 4 mm oberhalb der geometrischen Mitte) eine mittlere Wirkung von 0 dpt und bei einem Blick durch den Punkt 11 mm unterhalb der geometrischen Mitte und -2,5 mm horizontal in nasaler Richtung eine mittlere Wirkung von 2,50 dpt. D.h. auf einer Länge von 15 mm steigt demnach die Glaswirkung um ca. 2,50 dpt an.

Der in Figur 2b) gezeigte Restastigmatismusverlauf des Gleitsicht-Brillenglases nach dem Stand der Technik zeigt den nach dem Satz von Minkwitz zu erwartenden Anstieg des Restastigmatismus in Richtung senkrecht zur Hauptblicklinie. Im gezeigten Beispiel ergeben sich folgende Werte für die Breite des Bereichs mit Restastigmatismus < 1 dpt (Progressionskanal):

     Bei 0.25*Addition: 6.1 mm
     Bei 0.50*Addition: 4.6 mm
     Bei 0.75*Addition: 5.0 mm

In der Zeichnung entspricht dies den y-Werten -0.5 mm, -4 mm, -7.5 mm. Die Hauptblicklinie ist in der Zeichnung markiert.

Figur 2c) zeigt die Verteilung des mittleren Flächenbrechwerts der als Freiformfläche ausgebildeten Rückfläche. Die Flächenkrümmung nimmt von oben nach unten stetig ab, der mittlere Flächenbrechwert steigt von -5,50 dpt bei y = ca. 2 mm auf -3,50 dpt bei y = -15 mm.

Die Verteilung des Flächenastigmatismus der Rückfläche des Gleitsicht-Brillenglases nach dem Stand der Technik, der der Figur 2d) zu entnehmen ist, entspricht hier genau dem Restastigmatismus des Glases: verschwindender Astigmatismus im Fernteil und im Progressionskanal, seitlich des Progressionskanals rascher Anstieg des Astigmatismus.

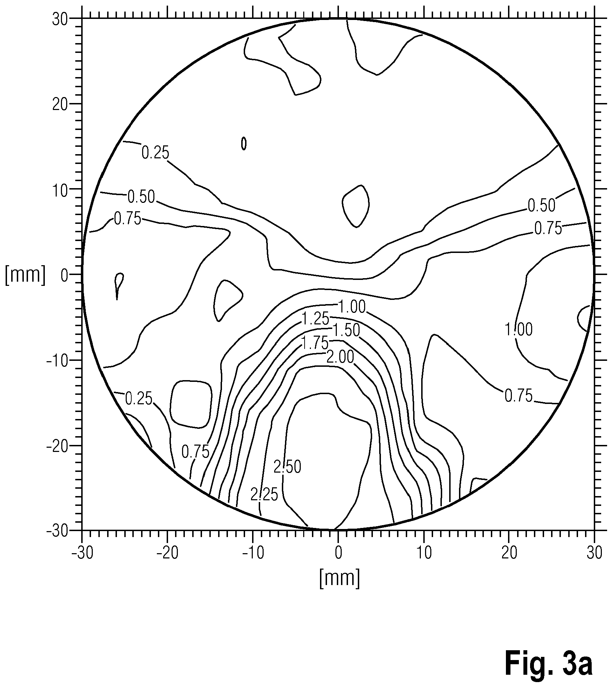

Ein erfindungsgemäßes Gleitsicht-Brillenglas zeichnet sich nunmehr durch die nachfolgend beschriebenen und in den Figuren 3a) bis 3f) dargestellten optischen Eigenschaften aus.

Der Figur 3a) entnimmt man die Verteilung der mittleren Wirkung, welche der Verteilung der mittleren Wirkung des Gleitsicht-Brillenglases nach dem Stand der Technik, dargestellt in Figur 2a), entspricht. Insbesondere entnimmt man den Figuren 2a) und 3a), dass der Wirkungsanstieg entlang der Hauptblicklinie im Progressionsbereich gleich ist.

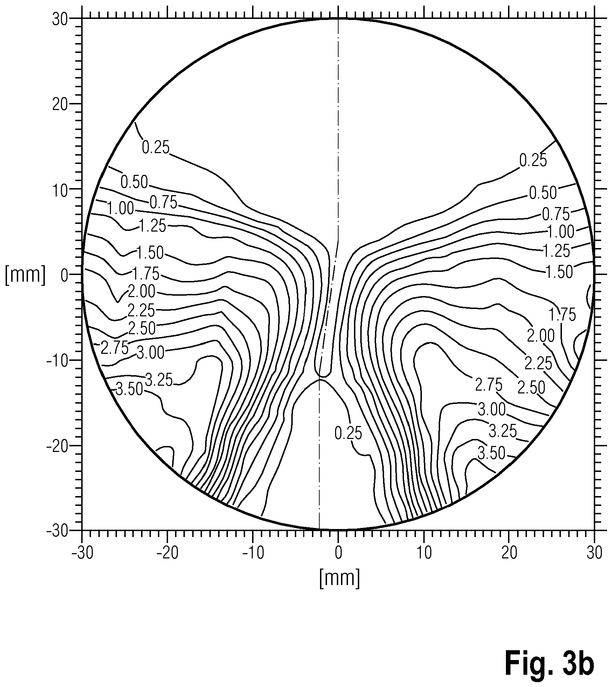

Der in Figur 3b) gezeigte Restastigmatismusverlauf zeigt einen Anstieg des Restastigmatismus in Richtung senkrecht zur Hauptblicklinie, der bei dem erfindungsgemäßen GRIN-Gleitsicht-Brillenglas deutlich geringer ausfällt als nach dem Stand der Technik. Im gezeigten Beispiel ergeben sich folgende Werte für die Breite des Bereichs mit Restastigmatismus < 1 dpt (Progressionskanal):

     Bei 0.25*Addition: 7.3 mm
     Bei 0.50*Addition: 6.0 mm
     Bei 0.75*Addition: 6.5 mm

In der Zeichnung entspricht dies den y-Werten -0.5 mm, -4 mm, -7.5 mm.

Die Kanalverbreiterung gegenüber dem Glas mit konstanter Brechzahl beträgt also überall mindestens 1.2 mm, was einer Verbreiterung um mindestens 20 % entspricht.

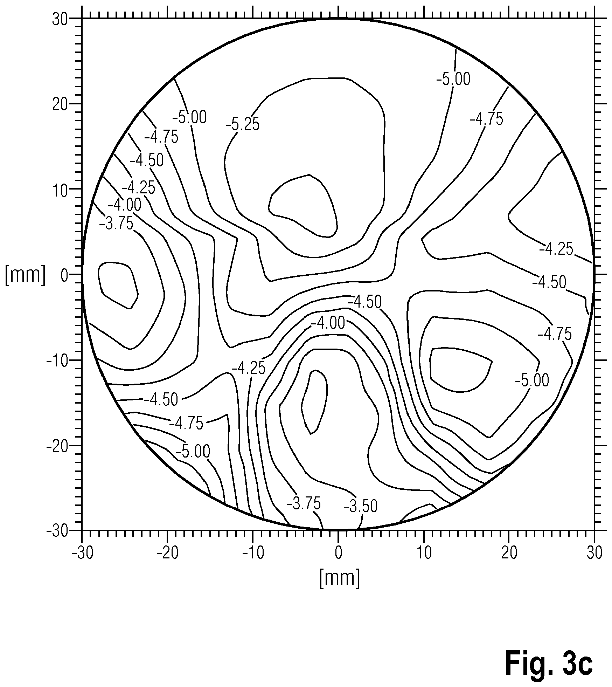

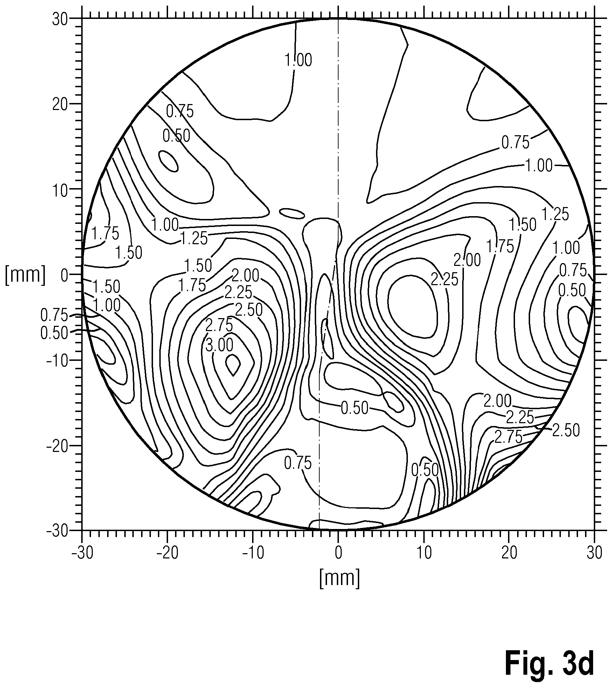

Figur 3c) zeigt den auf eine Brechzahl von n=1,60 bezogenen mittleren Flächenbrechwert der rückseitigen Freiformfläche und Figur 3d) zeigt den auf eine Brechzahl von n=1,60 bezogenen Flächenastigmatismus der rückseitigen Freiformfläche. Um einen Vergleich der mittleren Krümmungen mit der Figur 2c) und des Flächenastigmatismus mit der Figur 2d) zu ermöglichen, wurde bei der Berechnung nicht das GRIN-Material, sondern ein Material mit der Brechzahl n = 1.600 verwendet.

Der Vergleich der Figuren 2c) und 2d) mit den Figuren 3c) und 3d) zeigt, dass sich die Gestalt der Freiformfläche deutlich geändert hat: sowohl die Verteilung des mittleren Flächenbrechwerts als auch die Verteilung des Flächenastigmatismus (gerechnet mit n = 1.600) lassen keinen typischen Progressionskanal mehr erkennen. Aus der Flächenform allein lässt sich bei dem erfindungsgemäßen GRIN-Gleitsicht-Brillenglas nicht erkennen, dass es sich um ein Gleitsichtglas handelt: der Astigmatismus im Fernteil und im Progressionskanal verschwindet nicht.

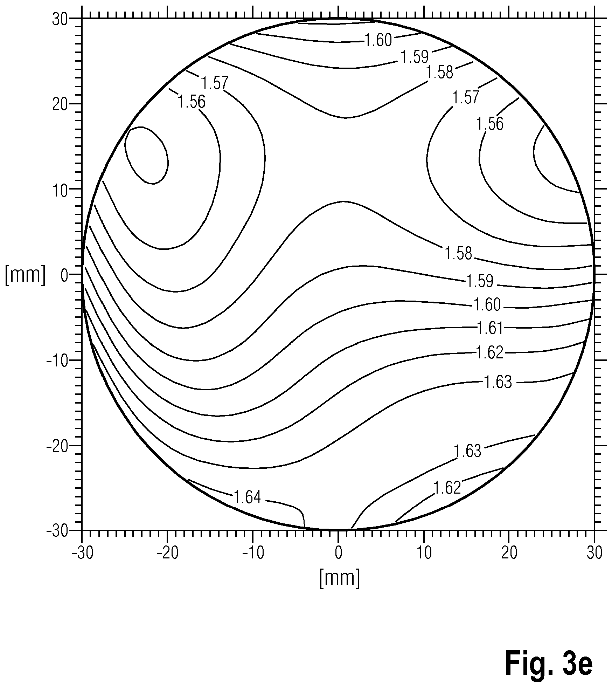

Die Brechzahlverteilung des erfindungsgemäßen Gleitsicht-Brillenglases zeigt die Figur 3e). Diese zeichnet sich dadurch aus, dass sie weder Punkt- noch Achsensymmetrie aufweist. Die minimale Brechzahl von 1,55 tritt im oberen seitlichen Bereich auf, die maximale Brechzahl von 1,64 im unteren Bereich. Die Brechzahlverteilung ist in der Richtung senkrecht zur dargestellten Ebene invariant, sie verändert sich also nur in zwei Raumdimensionen.

Die Gleichung

$$n = 1{,}60 + \sum_{n=1}^{36} c_n Z_n(x,y)$$

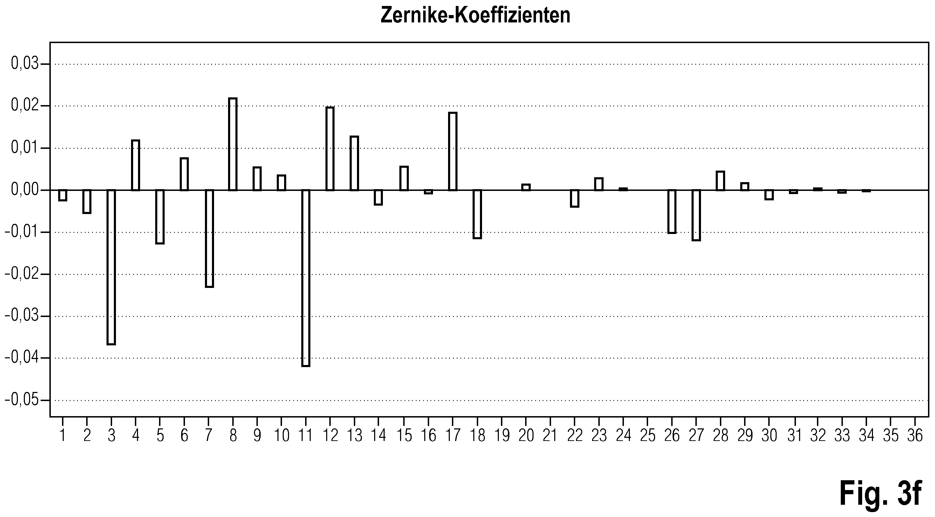

stellt eine Fringe-Zernike-Reihenentwicklung der Brechzahlverteilung des erfindungsgemäßen Gleitsicht-Brillenglases dar. $Z_n(x,y)$ bezeichnet die Fringe-Zernike-Polynome in kartesischen Koordinaten. Figur 3f) entnimmt man die Fringe-Zernike-Koeffizienten der Brechzahlverteilung des erfindungsgemäßen Gleitsicht-Brillenglases nach dem Beispiel.

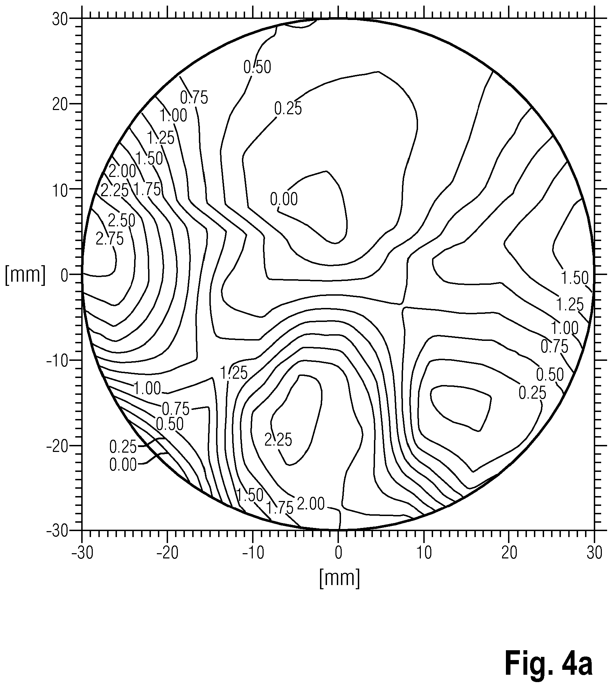

Zum Vergleich zeigen die Figuren 4a) und 4b) optische Eigenschaften eines Vergleichs-Gleitsicht-Brillenglases mit derselben Geometrie wie das erfindungsgemäße Gleitsicht-Brillenglas nach der Figur 3, gerechnet basierend auf einem Substrat aus einem Material mit konstanter Brechzahl von n=1,60.

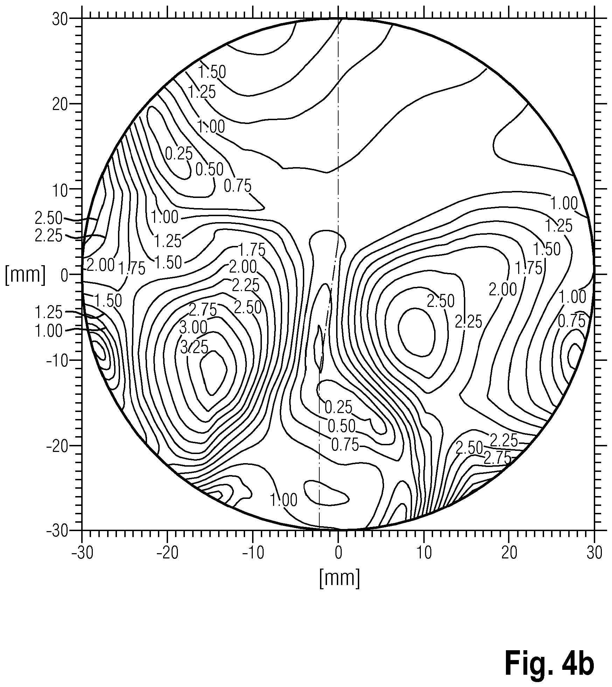

Die in den Figuren 4a) und 4b) gezeigten Verteilungen von mittlerer Wirkung und Restastigmatismus weisen nicht die für ein nutzbares Gleitsicht-Brillenglas erforderlichen Eigenschaften auf, insbesondere nicht für die hier beschriebenen Gebrauchsbedingungen und der erforderlichen optischen Korrektur für den Brillenträger. Wie man der Figur 4b) entnehmen kann, ist bereits im Fernbereich ein Restastigmatismus von mindestens 0.75 dpt vorhanden. Damit ist dieses Gleitsicht-Brillenglas für den hier betrachteten emmetropen Brillenträger nicht brauchbar. Die geforderte Nahteilwirkung von 2.5 dpt wird, wie man Figur 4a) entnehmen kann, nirgendwo erreicht. Darüber hinaus beträgt der Restastigmatismus in einem großen Bereich des Nahteils mehr als 1 dpt, wie Figur 4b) zeigt.

**Patentansprüche**

1. Erzeugnis umfassend ein Gleitsicht-Brillenglas, wobei

   - das Gleitsicht-Brillenglas ein Substrat mit einer Vorderfläche und einer Rückfläche umfasst, welches aus einem Material mit räumlich variierenden Brechungsindex besteht, wobei die Vorderfläche eine Vorderflächengeometrie und die Rückfläche eine Rückflächengeometrie aufweisen, wobei
   - die Vorderflächengeometrie und/oder die Rückflächengeometrie eine Freiformflächengeometrie ist/sind, wobei
   - das Gleitsicht-Brillenglas einen Fern-Konstruktionsbezugspunkt und einen Nah-Konstruktionsbezugspunkt aufweist, wobei
   - das Gleitsicht-Brillenglas folgende optische Anforderungen erfüllt
   (1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004
   (2) einen monoton stetigen Anstieg der dioptrischen Wirkung zwischen Fern-Konstruktionsbezugspunkt und Nah-Konstruktionsbezugspunkt auf einer Hauptblicklinie
   (3) einen Progressionskanal, welcher dadurch definiert ist, dass der Restastigmatismus unterhalb eines Wertes aus der Gruppe

      (a) 0,25 Dioptrien
      (b) 0,38 Dioptrien
      (c) 0,50 Dioptrien

   liegt, **dadurch gekennzeichnet, dass**

      (i) die Vorderflächengeometrie und die Rückflächengeometrie derart ausgebildet sind, dass unter Annahme eines Substrats aus einem Material mit räumlich nicht variierendem Brechungsindex zwischen 1,5 und 1,8 wenigstens eine der optischen Anforderungen (1) bis (3) nicht erfüllt ist und dass jedoch die tatsächlich vorliegende räumliche Variation des Brechungsindex des Materials des Substrats des Gleitsicht-Brillenglases derart ausgebildet ist, dass alle optischen Anforderungen (1) bis (3) erfüllt sind und gegenüber der Annahme eines Substrats aus einem Material mit räumlich nicht variierendem Brechungsindex zwischen 1,5 und 1,8 eine Reduktion des Restastigmatismus seitlich des Progressionskanals vorliegt dergestalt, dass die Breite des Progressionskanals zunimmt, wobei diese Breite definiert ist durch eine Schranke des Restastigmatismus im Bereich zwischen 0,25 Dioptrien und 0,50 Dioptrien.

2. Erzeugnis umfassend eine auf einem Datenträger in Form von computerlesbaren Daten befindliche Darstellung des Gleitsicht-Brillenglases mit Anweisungen für seine Herstellung durch ein additives Verfahren oder eine Darstellung des Gleitsicht-Brillenglases mit Anweisungen für seine Herstellung durch ein additives Verfahren in Form eines computerlesbaren Datensignals, wobei

- das Gleitsicht-Brillenglas ein Substrat mit einer Vorderfläche und einer Rückfläche umfasst, welches aus einem Material mit räumlich variierenden Brechungsindex besteht, wobei die Vorderfläche eine Vorderflächengeometrie und die Rückfläche eine Rückflächengeometrie aufweisen, wobei
- die Vorderflächengeometrie und/oder die Rückflächengeometrie eine Freiformflächengeometrie ist/sind, wobei
- das Gleitsicht-Brillenglas einen Fern-Konstruktionsbezugspunkt und einen Nah-Konstruktionsbezugspunkt aufweist, wobei
- das Gleitsicht-Brillenglas folgende optische Anforderungen erfüllt
(1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004
(2) einen monoton stetigen Anstieg der dioptrischen Wirkung zwischen Fern-Konstruktionsbezugspunkt und Nah-Konstruktionsbezugspunkt auf einer Hauptblicklinie
(3) einen Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt,
**dadurch gekennzeichnet, dass**

(i) die Vorderflächengeometrie und die Rückflächengeometrie derart ausgebildet sind, dass unter Annahme eines Substrats aus einem Material mit räumlich nicht variierendem Brechungsindex zwischen 1,5 und 1,8 wenigstens eine der optischen Anforderungen (1) bis (3) nicht erfüllt ist und dass jedoch die tatsächlich vorliegende räumliche Variation des Brechungsindex des Materials des Substrats des Gleitsicht-Brillenglases derart ausgebildet ist, dass alle optischen Anforderungen (1) bis (3) erfüllt sind und gegenüber der Annahme eines Substrats aus einem Material mit räumlich nicht variierendem Brechungsindex zwischen 1,5 und 1,8 eine Reduktion des Restastigmatismus seitlich des Progressionskanals vorliegt dergestalt, dass die Breite des Progressionskanals zunimmt, wobei diese Breite definiert ist durch eine Schranke des Restastigmatismus im Bereich zwischen 0,25 Dioptrien und 0,50 Dioptrien.

3. Erzeugnis umfassend ein Gleitsicht-Brillenglas, wobei

- das Gleitsicht-Brillenglas ein Substrat mit einer Vorderfläche und einer Rückfläche umfasst, welches aus einem Material mit räumlich variierenden Brechungsindex besteht, wobei die Vorderfläche eine Vorderflächengeometrie und die Rückfläche eine Rückflächengeometrie aufweisen, wobei
- die Vorderflächengeometrie oder die Rückflächengeometrie eine Freiformflächengeometrie ist, wobei
- das Gleitsicht-Brillenglas einen Fern-Konstruktionsbezugspunkt und einen Nah-Konstruktionsbezugspunkt aufweist, wobei
- das Gleitsicht-Brillenglas folgende optische Anforderungen erfüllt
(1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004
(2) einen monoton stetigen Anstieg der dioptrischen Wirkung zwischen Fern-Konstruktionsbezugspunkt und Nah-Konstruktionsbezugspunkt auf einer Hauptblicklinie
(3) einen Progressionskanal, welcher dadurch definiert ist, dass der Restastigmatismus unterhalb eines Wertes aus der Gruppe

(a) 0,25 Dioptrien
(b) 0,38 Dioptrien
(c) 0,50 Dioptrien

liegt,
**dadurch gekennzeichnet, dass**

(ii) für den Fall, dass die Vorderfläche des Gleitsicht-Brillenglases eine Freiformflächengeometrie besitzt, die Freiformflächengeometrie der Vorderfläche gegenüber einem Vergleichs-Gleitsicht-Brillenglas mit gleicher Rückflächengeometrie, mit gleichem dioptrischen Wirkungsverlauf und mit gleichem Restastigmatismus für die Brillenstrahlengänge durch die Hauptblicklinie und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert ist und die modifizierte Freiformflächengeometrie der Vorderfläche des Gleitsicht-Brillenglases und die räumliche Variation des Brechungsindex derart aufeinander abgestimmt sind, dass für dieses Gleitsicht-Brillenglas ein erster rechnerisch ermittelter Wert des Flächenastigmatismus der Vorderfläche an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für das Vergleichs-Gleitsicht-Brillenglas aus einem Material mit räumlich nicht variierendem Brechungsindex rechnerisch ermittelter Wert des Flächenastigmatismus der Vorderfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt, oder dass

(iii) für den Fall, dass die Rückfläche des Gleitsicht-Brillenglases eine Freiformflächengeometrie besitzt, die Freiformflächengeometrie der Rückfläche gegenüber einem Vergleichs-Gleitsicht-Brillenglas mit gleicher Vorderflächengeometrie, mit gleichem dioptrischen Wirkungsverlauf und mit gleichem Restastigmatismus für die Brillenträgerstrahlengänge durch die Hauptblicklinie und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Rückfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert ist und die modifizierte Freiformflächengeometrie der Rückfläche des Gleitsicht-Brillenglases und die räumliche Variation des Brechungsindex derart aufeinander abgestimmt sind, dass für dieses Gleitsicht-Brillenglas ein erster rechnerisch ermittelter Wert des Flächenastigmatismus der Rückfläche an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für das Vergleichs-Gleitsicht-Brillenglas aus einem Material mit räumlich nicht variierendem Brechungsindex rechnerisch ermittelter Wert des Flächenastigmatismus der Rückfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt.

4.  Erzeugnis umfassend eine auf einem Datenträger in Form von computerlesbaren Daten befindliche Darstellung des Gleitsicht-Brillenglases mit Anweisungen für seine Herstellung durch ein additives Verfahren oder eine Darstellung des Gleitsicht-Brillenglases mit Anweisungen für seine Herstellung durch ein additives Verfahren in Form eines computerlesbaren Datensignals, wobei

    - das Gleitsicht-Brillenglas ein Substrat mit einer Vorderfläche und einer Rückfläche umfasst, welches aus einem Material mit räumlich variierenden Brechungsindex besteht, wobei die Vorderfläche eine Vorderflächengeometrie und die Rückfläche eine Rückflächengeometrie aufweisen, wobei
    - die Vorderflächengeometrie oder die Rückflächengeometrie eine Freiformflächengeometrie ist, wobei
    - das Gleitsicht-Brillenglas einen Fern-Konstruktionsbezugspunkt und einen Nah-Konstruktionsbezugspunkt aufweist, wobei
    - das Gleitsicht-Brillenglas folgende optische Anforderungen erfüllt
    (1) eine verordnete dioptrische Wirkung im Fern-Konstruktionsbezugspunkt innerhalb der zulässigen Grenzabweichungen nach DIN EN ISO 8980-2:2004 und eine verordnete dioptrische Wirkung im Nah-Konstruktionsbezugspunkt innerhalb der zulässigen Grenzabweichungen nach DIN EN ISO 8980-2:2004
(2) einen monoton stetigen Anstieg der dioptrischen Wirkung zwischen Fern-Konstruktionsbezugspunkt und Nah-Konstruktionsbezugspunkt auf einer Hauptblicklinie
(3) einen Progressionskanal, welcher dadurch definiert ist, dass der Restastigmatismus unterhalb eines Wertes aus der Gruppe

    (a) 0,25 Dioptrien
    (b) 0,38 Dioptrien
    (c) 0,50 Dioptrien

liegt,
**dadurch gekennzeichnet, dass**
(ii) für den Fall, dass die Vorderfläche des Gleitsicht-Brillenglases eine Freiformflächengeometrie besitzt, die Freiformflächengeometrie der Vorderfläche gegenüber einem Vergleichs-Gleitsicht-Brillenglas mit gleicher Rückflächengeometrie, mit gleichem dioptrischen Wirkungsverlauf und mit gleichem Restastigmatismus für die Brillenstrahlengänge durch die Hauptblicklinie und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert ist und die modifizierte Freiformflächengeometrie der Vorderfläche des Gleitsicht-Brillenglases und die räumliche Variation des Brechungsindex derart aufeinander abgestimmt sind, dass für dieses Gleitsicht-Brillenglas ein erster rechnerisch ermittelter Wert des Flächenastigmatismus der Vorderfläche an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für das Vergleichs-Gleitsicht-Brillenglas aus einem Material mit räumlich nicht variierendem Brechungsindex rechnerisch ermittelter Wert des Flächenastigmatismus der Vorderfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt, oder dass

(iii) für den Fall, dass die Rückfläche des Gleitsicht-Brillenglases eine Freiformflächengeometrie besitzt, die Freiformflächengeometrie der Rückfläche gegenüber einem Vergleichs-Gleitsicht-Brillenglas mit gleicher Vorderflächengeometrie, mit gleichem dioptrischen Wirkungsverlauf und mit gleichem Restastigmatismus für die Brillenträgerstrahlengänge durch die Hauptblicklinie und mit einem Substrat aus einem Material mit räumlich nicht variierenden Brechungsindex, der einen Wert aufweist, der dem Wert des räumlich variierenden Brechungsindex des Materials des Substrats des Gleitsicht-Brillenglases an der Stelle der Hauptblicklinie auf der Rückfläche entspricht, an dem das Gleitsicht-Brillenglas mit dem Substrat aus dem Material mit räumlich variierendem Brechungsindex die Hälfte des gesamten dioptrischen Wirkungsanstiegs erfährt, modifiziert ist und die modifizierte Freiformflächengeometrie der Rückfläche des Gleitsicht-Brillenglases und die räumliche Variation des Brechungsindex derart aufeinander abgestimmt sind, dass für dieses Gleitsicht-Brillenglas ein erster rechnerisch ermittelter Wert des Flächenastigmatismus der Rückfläche an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für das Vergleichs-Gleitsicht-Brillenglas aus einem Material mit räumlich nicht variierendem Brechungsindex rechnerisch ermittelter Wert des Flächenastigmatismus der Rückfläche mit Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt.

5. Erzeugnis nach Anspruch 3 oder 4, **dadurch gekennzeichnet, dass** der Wert des ersten rechnerisch ermittelten Flächenastigmatismus

    - um wenigstens 0,25 Dioptrien größer als der Wert des zweiten rechnerisch ermittelten Flächenastigmatismus ist oder
    - um wenigstens ein Drittel des Werts der Nahzusatzwirkung größer als der Wert des zweiten rechnerisch ermittelten Flächenastigmatismus ist.

6. Erzeugnis nach einem der Ansprüche 3 bis 5, **dadurch gekennzeichnet, dass** der Wert des ersten rechnerisch ermittelten Flächenastigmatismus nicht nur an einer Stelle größer ist als der Wert des zweiten rechnerisch ermittelten Flächenastigmatismus, sondern in einem Bereich längs der Hauptblicklinie, in dem das Gleitsicht-Brillenglas und das Vergleichs-Gleitsicht-Brillenglas ein Viertel bis drei Viertel des gesamten dioptrischen Wirkungsanstiegs erfährt.

7. Computerimplementiertes Verfahren zum Entwerfen eines Gleitsicht-Brillenglases, welches ein Substrat mit einer Vorderfläche und einer Rückfläche umfasst, welches aus einem Material mit räumlich variierenden Brechungsindex besteht, dessen Vorderfläche und/oder dessen Rückfläche eine Freiformflächengeometrie besitzt/besitzen, welches einen Fern-Konstruktionsbezugspunkt und einen Nah-Konstruktionsbezugspunkt aufweist und welches folgende optische Anforderungen erfüllt:

   (1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
   (2) ein monoton stetiger Anstieg der verordneten dioptrischen Wirkung zwischen Fern-Konstruktionsbezugspunkt und Nah-Konstruktionsbezugspunkt liegt auf einer Hauptblicklinie
   (3) es existiert ein Progressionskanal, welcher dadurch definiert ist, dass der Restastigmatismus unterhalb eines Wertes aus der Gruppe

      (a) 0,25 Dioptrien
      (b) 0,38 Dioptrien
      (c) 0,50 Dioptrien

   liegt,
   **dadurch gekennzeichnet, dass**
   (i) die Freiformflächengeometrie der Vorderfläche und/oder der Rückfläche des Gleitsicht-Brillenglases und die räumliche Variation des Brechungsindex derart aufeinander abgestimmt werden, dass ein Vergleichs-Gleitsicht-Brillenglas mit gleicher Geometrie aber basierend auf einem Substrat aus einem Material mit räumlich nicht variierendem Brechungsindex wenigstens eine der optischen Anforderungen (1) bis (3) nicht erfüllt und gegenüber dem Vergleichs-Gleitsicht-Brillenglas eine Reduktion des Restastigmatismus seitlich des Progressionskanals vorliegt dergestalt, dass die Breite des Progressionskanals zunimmt, wobei diese Breite definiert ist durch eine Schranke des Restastigmatismus im Bereich zwischen 0,25 Dioptrien und 0,50 Dioptrien.

8. Computerimplementiertes Verfahren zum Entwerfen eines Gleitsicht-Brillenglases, welches ein Substrat mit einer Vorderfläche und einer Rückfläche umfasst, welches aus einem Material mit räumlich variierenden Brechungsindex besteht, dessen Vorderfläche und/oder dessen Rückfläche eine Freiformflächengeometrie besitzt/besitzen, welches einen Fern-Konstruktionsbezugspunkt und einen Nah-Konstruktionsbezugspunkt aufweist und welches folgende optische Anforderungen erfüllt:

   (1) eine verordnete dioptrische Wirkung im Fern-Konstruktionsbezugspunkt liegt innerhalb der zulässigen Grenzabweichungen nach DIN EN ISO 8980-2:2004 und eine verordnete dioptrische Wirkung im Nah-Konstruktionsbezugspunkt liegt innerhalb der zulässigen Grenzabweichungen nach DIN EN ISO 8980-2:2004
   (2) ein monoton stetiger Anstieg der verordneten dioptrischen Wirkung zwischen Fern-Konstruktionsbezugspunkt und Nah-Konstruktionsbezugspunkt liegt auf einer Hauptblicklinie
   (3) es existiert ein Progressionskanal, welcher dadurch definiert ist, dass der Restastigmatismus unterhalb eines Wertes aus der Gruppe

      (a) 0,25 Dioptrien
      (b) 0,38 Dioptrien
      (c) 0,50 Dioptrien

   liegt,
   **dadurch gekennzeichnet, dass**

   (ii) die Freiformflächengeometrie der Vorderfläche und/oder der Rückfläche des Gleitsicht-Brillenglases und die räumliche Variation des Brechungsindex derart aufeinander abgestimmt werden, dass für dieses Gleitsicht-Brillenglas ein erster rechnerisch ermittelter Wert des Flächenastigmatismus der Fläche mit der Freiformflächengeometrie an der Stelle, durch die der zugehörige Brillenträgerstrahlengang durch den Ort auf der Hauptblicklinie verläuft, an dem dieses Gleitsicht-Brillenglas die Hälfte des gesamten mittleren Wirkungsanstiegs erfährt, größer ist, als ein zweiter, für ein Vergleichs-Gleitsicht-Brillenglas aus einem Material mit räumlich nicht variierendem Brechungsindex rechnerisch ermittelter Wert des Flächenastigmatismus der Fläche mit der Freiformflächengeometrie an der Stelle, an dem der zugehörige Brillenträgerstrahlengang durch den Ort auf der Hauptblicklinie verläuft, an dem dieses Vergleichs-Gleitsicht-Brillenglas die Hälfte des gesamten mittleren Wirkungsanstiegs erfährt, und wobei das Vergleichs-Gleitsicht-Brillenglas eine gleiche Lage der Fläche mit der Freiformflächengeometrie und eine gleiche Geometrie der gegenüber liegenden Fläche, einen gleichen dioptrischen Wirkungsverlauf längs der Hauptblicklinie aufweist und der Brechungsindex einen Wert aufweist, der dem Wert des Brechungsindex des Substrats an der Stelle der Hauptblicklinie auf der Vorderfläche entspricht, an dem das Gleitsicht-Brillenglas mit dem Substrat aus dem Material mit räumlich variierendem Brechungsindex die Hälfte des gesamten dioptrischen Wirkungsanstiegs erfährt.

**9.** Computerprogramm mit Programmcode zur Durchführung aller Verfahrensschritte nach Anspruch 7 oder 8, wenn das Computerprogramm in einem Computer geladen und/oder in einem Computer ausgeführt wird.

**10.** Computerlesbares Medium mit einem Computerprogramm nach Anspruch 9.

**11.** Verfahren zum Herstellen eines nach einem Verfahren nach Anspruch 7 oder 8 entworfenen Gleitsicht-Brillenglases mit einem additiven Verfahren.

**12.** Computer mit einem Prozessor, und mit einem Speicher, auf dem ein Computerprogramm nach Anspruch 9 abgespeichert ist und der eingerichtet ist, ein Verfahren nach Anspruch 7 oder 8 auszuführen.

**Claims**

**1.** Product comprising a progressive power spectacle lens, wherein

- the progressive power spectacle lens comprises a substrate with a front surface and a back surface, said substrate consisting of a material with a spatially varying refractive index, wherein the front surface has a front surface geometry and the back surface has a back surface geometry, wherein
- the front surface geometry and/or the back surface geometry are/is a free-form surface geometry, wherein
- the progressive power spectacle lens has a distance design reference point and a near design reference point, wherein
- the progressive power spectacle lens satisfies the following optical requirements

(1) a prescribed dioptric power at the distance design reference point within the admissible limit deviations pursuant to DIN EN ISO 8980-2:2004 and a prescribed dioptric power at the near design reference point within the admissible limit deviations pursuant to DIN EN ISO 8980-2:2004,
(2) a monotonically increasing gradient of the dioptric power between distance design reference point and near design reference point on a principal line of sight,
(3) an intermediate corridor, which is defined by virtue of the residual astigmatism lying below a value from the group of

(a) 0.25 dioptres
(b) 0.38 dioptres
(c) 0.50 dioptres,

**characterized in that**

(i) the front surface geometry and the back surface geometry are embodied in such a way that, under the assumption of a substrate made of a material with a spatially non-varying refractive index of between 1.5 and 1.8, at least one of the optical requirements (1) to (3) has not been satisfied and that, however, the actually present spatial variation of the refractive index of the material of the substrate of the progressive power spectacle lens is embodied in such a way that all optical requirements (1) to (3) are satisfied and, in relation to the assumption of a substrate made of a material with a spatially non-varying refractive index of between 1.5 and 1.8, there is a reduction in the residual astigmatism to the side of the intermediate corridor in such a way that the width of the intermediate corridor increases, wherein this width is defined by a bound of the residual astigmatism in the range between 0.25 dioptres and 0.50 dioptres.

**2.** Product comprising a representation of the progressive power spectacle lens situated on a data medium in the form of computer-readable data with instructions for the production thereof by an additive method or a representation of the progressive power spectacle lens with instructions for the production thereof by an additive method in the form of a computer-readable data signal, wherein

- the progressive power spectacle lens comprises a substrate with a front surface and a back surface, said substrate consisting of a material with a spatially varying refractive index, wherein the front surface has a front surface geometry and the back surface has a back surface geometry, wherein
- the front surface geometry and/or the back surface geometry are/is a free-form surface geometry, wherein
- the progressive power spectacle lens has a distance design reference point and a near design reference point, wherein
- the progressive power spectacle lens satisfies the following optical requirements

(1) a prescribed dioptric power at the distance design reference point within the admissible limit deviations pursuant to DIN EN ISO 8980-2:2004 and a prescribed dioptric power at the near design reference point within the admissible limit deviations pursuant to DIN EN ISO 8980-2:2004,

(2) a monotonically increasing gradient of the dioptric power between distance design reference point and near design reference point on a principal line of sight,

(3) an intermediate corridor, which is defined by virtue of the residual astigmatism lying below a value from the group of

    (a) 0.25 dioptres
    (b) 0.38 dioptres
    (c) 0.50 dioptres,
    **characterized in that**

        (i) the front surface geometry and the back surface geometry are embodied in such a way that, under the assumption of a substrate made of a material with a spatially non-varying refractive index of between 1.5 and 1.8, at least one of the optical requirements (1) to (3) has not been satisfied and that, however, the actually present spatial variation of the refractive index of the material of the substrate of the progressive power spectacle lens is embodied in such a way that all optical requirements (1) to (3) are satisfied and, in relation to the assumption of a substrate made of a material with a spatially non-varying refractive index of between 1.5 and 1.8, there is a reduction in the residual astigmatism to the side of the intermediate corridor in such a way that the width of the intermediate corridor increases, wherein this width is defined by a bound of the residual astigmatism in the range between 0.25 dioptres and 0.50 dioptres.

3. Product comprising a progressive power spectacle lens, wherein

    - the progressive power spectacle lens comprises a substrate with a front surface and a back surface, said substrate consisting of a material with a spatially varying refractive index, wherein the front surface has a front surface geometry and the back surface has a back surface geometry, wherein

- the front surface geometry or the back surface geometry is a free-form surface geometry, wherein

- the progressive power spectacle lens has a distance design reference point and a near design reference point, wherein

- the progressive power spectacle lens satisfies the following optical requirements

    (1) a prescribed dioptric power at the distance design reference point within the admissible limit deviations pursuant to DIN EN ISO 8980-2:2004 and a prescribed dioptric power at the near design reference point within the admissible limit deviations pursuant to DIN EN ISO 8980-2:2004,

(2) a monotonically increasing gradient of the dioptric power between distance design reference point and near design reference point on a principal line of sight,

(3) an intermediate corridor, which is defined by virtue of the residual astigmatism lying below a value from the group of

    (a) 0.25 dioptres
    (b) 0.38 dioptres
    (c) 0.50 dioptres,
    **characterized in that**,

        (ii) in the case where the front surface of the progressive power spectacle lens has a free-form surface geometry, the free-form surface geometry of the front surface is modified in relation to a comparison progressive power spectacle lens with the same back surface geometry, with the same dioptric power profile and with the same residual astigmatism for the spectacle beam paths through the principal line of sight and with a substrate made of a material with a spatially non-varying refractive index, which has a value that corresponds to the value of the spatially varying refractive index of the material of the substrate of the progressive power spectacle lens at the point of the principal line of sight on the front surface at which the progressive power spectacle lens with the substrate made of the material with a spatially varying refractive index experiences half of the entire dioptric power increase, and the modified free-form surface geometry of the front surface of the progressive power spectacle lens and the spatial variation of the refractive index are adapted to one another in such a way that, for this progressive power spectacle lens, a first value of the surface astigmatism of the front surface, ascertained by calculation, at the point through which the associated spectacle wearer beam path extends through the location on the principal line of sight, at which this progressive power spectacle lens experiences half of the entire mean power increase, is greater than a second value of the surface astigmatism of the front surface with a free-form surface geometry, ascertained by calculation for the comparison progressive power spectacle lens from a material with a spatially non-varying refractive index, at the point at which the associated spectacle wearer beam path extends through the location on the principal line of sight at which this comparison progressive power spectacle lens experiences half of the entire mean power increase, or **in that**,

(iii) in the case where the back surface of the progressive power spectacle lens has a free-form surface geometry, the free-form surface geometry of the back surface is modified in relation to a comparison progressive power spectacle lens with the same front surface geometry, with the same dioptric power profile and with the same residual astigmatism for the spectacle wearer beam paths through the principal line of sight and with a substrate made of a material with a spatially non-varying refractive index, which has a value that corresponds to the value of the spatially varying refractive index of the material of the substrate of the progressive power spectacle lens at the point of the principal line of sight on the back surface at which the progressive power spectacle lens with the substrate made of the material with a spatially varying refractive index experiences half of the entire dioptric power increase, and the modified free-form surface geometry of the back surface of the progressive power spectacle lens and the spatial variation of the refractive index are adapted to one another in such a way that, for this progressive power spectacle lens, a first value of the surface astigmatism of the back surface, ascertained by calculation, at the point through which the associated spectacle wearer beam path extends through the location on the principal line of sight, at which this progressive power spectacle lens experiences half of the entire mean power increase, is greater than a second value of the surface astigmatism of the back surface with a free-form surface geometry, ascertained by calculation for the comparison progressive power spectacle lens from a material with a spatially non-varying refractive index, at the point at which the associated spectacle wearer beam path extends through the location on the principal line of sight at which this comparison progressive power spectacle lens experiences half of the entire mean power increase.

4. Product comprising a representation of the progressive power spectacle lens situated on a data medium in the form of computer-readable data with instructions for the production thereof by an additive method or a representation of the progressive power spectacle lens with instructions for the production thereof by an additive method in the form of a computer-readable data signal, wherein

- the progressive power spectacle lens comprises a substrate with a front surface and a back surface, said substrate consisting of a material with a spatially varying refractive index, wherein the front surface has a front surface geometry and the back surface has a back surface geometry, wherein
- the front surface geometry or the back surface geometry is a free-form surface geometry, wherein
- the progressive power spectacle lens has a distance design reference point and a near design reference point, wherein
- the progressive power spectacle lens satisfies the following optical requirements

(1) a prescribed dioptric power at the distance design reference point within the admissible limit deviations pursuant to DIN EN ISO 8980-2:2004 and a prescribed dioptric power at the near design reference point within the admissible limit deviations pursuant to DIN EN ISO 8980-2:2004,
(2) a monotonically increasing gradient of the dioptric power between distance design reference point and near design reference point on a principal line of sight,
(3) an intermediate corridor, which is defined by virtue of the residual astigmatism lying below a value from the group of

(a) 0.25 dioptres
(b) 0.38 dioptres
(c) 0.50 dioptres,
**characterized in that**,

(ii) in the case where the front surface of the progressive power spectacle lens has a free-form surface geometry, the free-form surface geometry of the front surface is modified in relation to a comparison progressive power spectacle lens with the same back surface geometry, with the same dioptric power profile and with the same residual astigmatism for the spectacle beam paths through the principal line of sight and with a substrate made of a material with a spatially non-varying refractive index, which has a value that corresponds to the value of the spatially varying refractive index of the material of the substrate of the progressive power spectacle lens at the point of the principal line of sight on the front surface at which the progressive power spectacle lens with the substrate made of the material with a spatially varying refractive index experiences half of the entire dioptric power increase, and the modified free-form surface geometry of the front surface of the progressive power spectacle lens and the spatial variation of the refractive index are adapted to one another in such a way that, for this progressive power spectacle lens, a first value of the surface astigmatism of the front surface, ascertained by calculation, at the point through which the associated spectacle wearer beam path extends through the location on the principal line of sight, at which this progressive power spectacle lens experiences half of the entire mean power increase, is greater than a second value of the surface astigmatism of the front surface with a free-form surface geometry, ascertained by calculation for the comparison progressive power spectacle lens from a material with a spatially non-varying refractive index, at the point at which the associated spectacle wearer beam path extends through the location on the principal line of sight at which this comparison progressive power spectacle lens experiences half of the entire mean power increase, or **in that**,
(iii) in the case where the back surface of the progressive power spectacle lens has a free-form surface geometry, the free-form surface geometry of the back surface is modified in relation to a comparison progressive power spectacle lens with the same front surface geometry, with the same dioptric power profile and with the same residual astigmatism for the spectacle wearer beam paths through the principal line of sight and with a substrate made of a material with a spatially non-varying refractive index, which has a value that corresponds to the value of the spatially varying refractive index of the material of the substrate of the progressive power spectacle lens at the point of the principal line of sight on the back surface at which the progressive power spectacle lens with the substrate made of the material with a spatially varying refractive index experiences half of the entire dioptric power increase, and the modified free-form surface geometry of the back surface of the progressive power spectacle lens and the spatial variation of the refractive index are adapted to one another in such a way that, for this progressive power spectacle lens, a first value of the surface astigmatism of the back surface, ascertained by calculation, at the point through which the associated spectacle wearer beam path extends through the location on the principal line of sight, at which this progressive power spectacle lens experiences half of the entire mean power increase, is greater than a second value of the surface astigmatism of the back surface with a free-form surface geometry, ascertained by calculation for the comparison progressive power spectacle lens from a material with a spatially non-varying refractive index, at the point at which the associated spectacle wearer beam path extends through the location on the principal line of sight at which this comparison progressive power spectacle lens experiences half of the entire mean power increase.

5. Product according to Claim 3 or 4, **characterized in that** the value of the first surface astigmatism ascertained by calculation

    - is greater than the value of the second surface astigmatism ascertained by calculation by at least 0.25 dioptres or
    - is greater than the value of the second surface astigmatism ascertained by calculation by at least one third of the value of the near addition power.

6. Product according to any one of Claims 3 to 5, **characterized in that** the value of the first surface astigmatism ascertained by calculation is greater than the value of the second surface astigmatism ascertained by calculation not only at one point but in a region along the principal line of sight, in which the progressive power spectacle lens and the comparison progressive power spectacle lens experience one quarter to three quarters of the entire dioptric power increase.

7. Computer-implemented method for designing a progressive power spectacle lens, which comprises a substrate with a front surface and a back surface, said substrate consisting of a material with a spatially varying refractive index, the front surface and/or the back surface of which have/has a free-form surface geometry which has a distance design reference point and a near design reference point and which satisfies the following optical requirements:

    (1) a prescribed dioptric power at the distance design reference point lies within the admissible limit deviations pursuant to DIN EN ISO 8980-2:2004 and a prescribed dioptric power at the near design reference point lies within the admissible limit deviations pursuant to DIN EN ISO 8980-2:2004,
    (2) a monotonically increasing gradient of the prescribed dioptric power between distance design reference point and near design reference point lies on a principal line of sight,
    (3) there is an intermediate corridor, which is defined by virtue of the residual astigmatism lying below a value from the group of

       (a) 0.25 dioptres
       (b) 0.38 dioptres
       (c) 0.50 dioptres,
       **characterized in that**

          (i) the free-form surface geometry of the front surface and/or the back surface of the progressive power spectacle lens and the spatial variation of the refractive index are adapted to one another in such a way that a comparison progressive power spectacle lens with the same geometry but based on a substrate made of a material with a spatially non-varying refractive index does not satisfy at least one of the optical requirements (1) to (3) and, in relation to the comparison progressive power spectacle lens, there is a reduction in the residual astigmatism to the side of the intermediate corridor in such a way that the width of the intermediate corridor increases, wherein this width is defined by a bound of the residual astigmatism in the range between 0.25 dioptres and 0.50 dioptres.

8. Computer-implemented method for designing a progressive power spectacle lens, which comprises a substrate with a front surface and a back surface, said substrate consisting of a material with a spatially varying refractive index, the front surface and/or the back surface of which have/has a free-form surface geometry which has a distance design reference point and a near design reference point and which satisfies the following optical requirements:

    (1) a prescribed dioptric power at the distance design reference point lies within the admissible limit deviations pursuant to DIN EN ISO 8980-2:2004 and a prescribed dioptric power at the near design reference point lies within the admissible limit deviations pursuant to DIN EN ISO 8980-2:2004,
    (2) a monotonically increasing gradient of the prescribed dioptric power between distance design reference point and near design reference point lies on a principal line of sight,
    (3) there is an intermediate corridor, which is defined by virtue of the residual astigmatism lying below a value from the group of

> (a) 0.25 dioptres
> (b) 0.38 dioptres
> (c) 0.50 dioptres,
> **characterized in that**
> (ii) the free-form surface geometry of the front surface and/or the back surface of the progressive power spectacle lens and the spatial variation of the refractive index are adapted to one another in such a way that, for this progressive power spectacle lens, a first value of the surface astigmatism of the surface with the free-form surface geometry, ascertained by calculation, at the point through which the associated spectacle wearer beam path extends through the location on the principal line of sight, at which this progressive power spectacle lens experiences half of the entire mean power increase, is greater than a second value of the surface astigmatism of the surface with the free-form surface geometry, ascertained by calculation for a comparison progressive power spectacle lens from a material with a spatially non-varying refractive index, at the point at which the associated spectacle wearer beam path extends through the location on the principal line of sight at which this comparison progressive power spectacle lens experiences half of the entire mean power increase, and wherein the comparison progressive power spectacle lens has the same relative position of the surface with the free-form surface geometry and the same geometry of the opposite surface, the same dioptric power profile along the principal line of sight and the refractive index has a value which corresponds to the value of the refractive index of the substrate at the point of the principal line of sight on the front surface, at which the progressive power spectacle lens with the substrate made of the material with a spatially varying refractive index experiences half of the entire dioptric power increase.

9. Computer program having program code for carrying out all method steps according to Claim 7 or 8 when the computer program is loaded onto a computer and/or executed on a computer.

10. Computer-readable medium comprising a computer program according to Claim 9.

11. Method for producing a progressive power spectacle lens designed according to a method according to Claim 7 or 8 using an additive method.

12. Computer comprising a processor and comprising a memory in which a computer program according to Claim 9 is stored, said computer being set up to carry out a method according to Claim 7 or 8.


**Revendications**

1. Article comprenant un verre de lunettes progressif, dans lequel

> - le verre de lunettes progressif comprend un substrat présentant une surface avant et une surface arrière, qui est composé d'un matériau présentant un indice de réfraction variant dans l'espace, dans lequel la surface avant présente une géométrie de surface avant et la surface arrière présente une géométrie de surface arrière, dans lequel
> - la géométrie de surface avant et/ou la géométrie de surface arrière est/sont une géométrie de surface de forme libre, dans lequel
> - le verre de lunettes progressif présente un point de référence de conception pour la vision de loin et un point de référence de conception pour la vision de près, dans lequel
> - le verre de lunettes progressif satisfait aux spécifications optiques suivantes :
>
> > (1) un effet dioptrique prescrit au point de référence de conception pour la vision de loin à l'intérieur des tolérances admissibles selon la norme DIN EN ISO 8980-2:2004 et un effet dioptrique prescrit au point de référence de conception pour la vision de près à l'intérieur des tolérances admissibles selon la norme DIN EN ISO 8980-2:2004,
> > (2) une augmentation monotone et continue de l'effet dioptrique entre le point de référence de conception pour la vision de loin et le point de référence de conception pour la vision de près sur une ligne de vision principale,
> > (3) un canal de progression qui est défini par le fait que l'astigmatisme résiduel se situe en dessous d'une valeur comprise dans le groupe suivant
> >
> > > (a) 0,25 dioptrie
> > > (b) 0,38 dioptrie
> > > (c) 0,50 dioptrie
> > > **caractérisé en ce que**
> > >
> > > > (i) la géométrie de surface avant et la géométrie de surface arrière sont réalisées de telle sorte que, dans l'hypothèse d'un substrat constitué d'un matériau présentant un indice de réfraction ne variant pas dans l'espace entre 1,5 et 1,8, au moins l'une des spécifications optiques (1) à (3) n'est pas satisfaite et **en ce que**, cependant, la variation dans l'espace effectivement présente de l'indice de réfraction du matériau du substrat du verre de lunettes progressif est réalisée de telle sorte que toutes les spécifications optiques (1) à (3) sont satisfaites et que, par rapport à l'hypothèse d'un substrat constitué d'un matériau présentant un indice de réfraction ne variant pas dans l'espace entre 1,5 et 1,8, il existe une réduction de l'astigmatisme résiduel du côté du canal de progression de telle sorte que la largeur du canal de progression augmente, dans lequel cette largeur est définie par une restriction de l'astigmatisme résiduel dans la plage comprise entre 0,25 dioptrie et 0,50 dioptrie.

2. Article comprenant une représentation du verre de lunettes progressif sur un support de données, sous la forme de données lisibles par ordinateur, comportant des instructions pour sa fabrication par un procédé additif ou une représentation du verre de lunettes progressif comportant des instructions pour sa fabrication par un procédé additif sous la forme d'un signal de données lisible par ordinateur, dans lequel

- le verre de lunettes progressif comprend un substrat présentant une surface avant et une surface arrière et qui est composé d'un matériau présentant un indice de réfraction variant dans l'espace, dans lequel la surface avant présente une géométrie de surface avant et la surface arrière présente une géométrie de surface arrière, dans lequel
- la géométrie de surface avant et/ou la géométrie de surface arrière est/sont une géométrie de surface de forme libre, dans lequel
- le verre de lunettes progressif présente un point de référence de conception pour la vision de loin et un point de référence de conception pour la vision de près, dans lequel
- le verre de lunettes progressif satisfait aux spécifications optiques suivantes :

(1) un effet dioptrique prescrit au point de référence de conception pour la vision de loin à l'intérieur des tolérances admissibles selon la norme DIN EN ISO 8980-2:2004 et un effet dioptrique prescrit au point de référence de conception pour la vision de près, à l'intérieur des tolérances admissibles selon la norme DIN EN ISO 8980-2:2004,
(2) une augmentation monotone et continue de l'effet dioptrique entre le point de référence de conception pour la vision de loin et le point de référence de conception pour la vision de près sur une ligne de vision principale,
(3) un canal de progression qui est défini par le fait que l'astigmatisme résiduel se situe en-dessous d'une valeur comprise dans le groupe suivant

(a) 0,25 dioptrie
(b) 0,38 dioptrie
(c) 0,50 dioptrie,
**caractérisé en ce que**

(i) la géométrie de surface avant et la géométrie de surface arrière sont réalisées de telle sorte que, dans l'hypothèse d'un substrat constitué d'un matériau présentant un indice de réfraction ne variant pas dans l'espace entre 1,5 et 1,8, au moins l'une des spécifications optiques (1) à (3) n'est pas satisfaite et **en ce que**, cependant, la variation dans l'espace effectivement présente de l'indice de réfraction du matériau du substrat du verre de lunettes progressif est réalisée de telle sorte que toutes les spécifications optiques (1) à (3) sont satisfaites et que, par rapport à l'hypothèse d'un substrat constitué d'un matériau présentant un indice de réfraction ne variant pas dans l'espace entre 1,5 et 1,8, il existe une réduction de l'astigmatisme résiduel du côté du canal de progression de telle sorte que la largeur du canal de progression augmente, dans lequel cette largeur est définie par une restriction de l'astigmatisme résiduel dans la plage comprise entre 0,25 dioptrie et 0,50 dioptrie.

3. Article comprenant un verre de lunettes progressif dans lequel

- le verre de lunettes progressif comprend un substrat présentant une surface avant et une surface arrière, qui est composé d'un matériau présentant un indice de réfraction variant dans l'espace, dans lequel la surface avant présente une géométrie de surface avant et la surface arrière présente une géométrie de surface arrière, dans lequel

- la géométrie de surface avant ou la géométrie de surface arrière est une géométrie de surface de forme libre, dans lequel
- le verre de lunettes progressif présente un point de référence de conception pour la vision de loin et un point de référence de conception pour la vision de près, dans lequel
- le verre de lunettes progressif satisfait aux spécifications optiques suivantes :

(1) un effet dioptrique prescrit au point de référence de conception pour la vision de loin à l'intérieur des tolérances admissibles selon la norme DIN EN ISO 8980-2:2004 et un effet dioptrique prescrit au point de référence de conception pour la vision de près à l'intérieur des tolérances admissibles selon la norme DIN EN ISO 8980-2:2004,

(2) une augmentation monotone et continue de l'effet dioptrique entre le point de référence de conception pour la vision de loin et le point de référence de conception pour la vision de près sur une ligne de vision principale,

(3) un canal de progression qui est défini par le fait que l'astigmatisme résiduel se situe en-dessous d'une valeur comprise dans le groupe suivant

(a) 0,25 dioptrie
(b) 0,38 dioptrie
(c) 0,50 dioptrie
**caractérisé en ce que**

(ii) dans le cas où la surface avant du verre de lunettes progressif présente une géométrie de surface de forme libre, la géométrie de surface de forme libre de la surface avant par rapport à un verre de lunettes progressif de comparaison présentant la même géométrie de surface arrière, la même courbe d'effet dioptrique et le même astigmatisme résiduel pour les chemins de rayons de lunettes passant par la ligne de vision principale et comportant un substrat constitué d'un matériau présentant un indice de réfraction ne variant pas dans l'espace, qui présente une valeur qui correspond à la valeur de l'indice de réfraction variant dans l'espace du matériau du substrat du verre de lunettes progressif au point de la ligne de vision principale, sur la surface avant, où le verre de lunettes progressif comportant le substrat constitué du matériau présentant un indice de réfraction variant dans l'espace subit la moitié de l'augmentation d'effet dioptrique totale, est modifiée, et la géométrie de surface de forme libre modifiée de la surface avant du verre de lunettes progressif et la variation dans l'espace de l'indice de réfraction sont adaptées l'une à l'autre de telle sorte que, pour ce verre de lunettes progressif, une première valeur, déterminée par calcul, de l'astigmatisme de surface de la surface avant au point par lequel passe le chemin de rayons correspondant du porteur de lunettes passant par l'endroit, sur la ligne de vision principale, où ce verre de lunettes progressif subit la moitié de l'augmentation d'effet moyenne totale, est supérieure à une deuxième valeur, déterminée par calcul, de l'astigmatisme de surface de la surface avant présentant une géométrie de surface de forme libre pour le verre de lunettes progressif de comparaison constitué d'un matériau présentant un indice de réfraction ne variant pas dans l'espace, au point où le chemin de rayons correspondant du porteur de lunettes passe par l'endroit, sur la ligne de vision principale, où ce verre de lunettes progressif de comparaison subit la moitié de l'augmentation d'effet moyenne totale, ou **en ce que**

(iii) dans le cas où la surface arrière du verre de lunettes progressif présente une géométrie de surface de forme libre, la géométrie de surface de forme libre de la surface arrière par rapport à un verre de lunettes progressif de comparaison présentant la même géométrie de surface avant, la même courbe d'effet dioptrique et le même astigmatisme résiduel pour les chemins de rayons du porteur de lunettes passant par la ligne de vision principale et comportant un substrat constitué d'un matériau présentant un indice de réfraction ne variant pas dans l'espace, qui présente une valeur qui correspond à la valeur de l'indice de réfraction variant dans l'espace du matériau du substrat du verre de lunettes progressif au point de la ligne de vision principale, sur la surface arrière, où le verre de lunettes progressif comportant le substrat constitué du matériau présentant un indice de réfraction variant dans l'espace subit la moitié de l'augmentation d'effet dioptrique totale, est modifiée, et la géométrie de surface de forme libre modifiée de la surface arrière du verre de lunettes progressif et la variation dans l'espace de l'indice de réfraction sont adaptées l'une à l'autre de telle sorte que, pour ce verre de lunettes progressif, une première valeur, déterminée par calcul, de l'astigmatisme de surface de la surface arrière au point par lequel passe le chemin de rayons correspondant du porteur de lunettes passant par l'endroit, sur la ligne de vision principale, où ce verre de lunettes progressif subit la moitié de l'augmentation d'effet moyenne totale, est supérieure à une deuxième valeur, déterminée par calcul, de l'astigmatisme de surface de la surface arrière présentant une géométrie de surface de forme libre pour le verre de lunettes progressif de comparaison constitué d'un matériau présentant un indice de réfraction ne variant pas dans l'espace, au point où le chemin de rayons correspondant du porteur de lunettes passe par l'endroit, sur la ligne de vision principale, où ce verre de lunettes progressif de comparaison subit la moitié de l'augmentation d'effet moyenne totale.

**4.** Article comprenant une représentation du verre de lunettes progressif sur un support de données, sous la forme de données lisibles par ordinateur, comportant des instructions pour sa fabrication par un procédé additif ou une représentation du verre de lunettes progressif comportant des instructions pour sa fabrication par un procédé additif sous la forme d'un signal de données lisible par ordinateur, dans lequel

- le verre de lunettes progressif comprend un substrat présentant une surface avant et une surface arrière, qui est composé d'un matériau présentant un indice de réfraction variant dans l'espace, dans lequel la surface avant présente une géométrie de surface avant et la surface arrière présente une géométrie de surface arrière, dans lequel

- la géométrie de surface avant ou la géométrie de surface arrière est une géométrie de surface de forme libre, dans lequel

- le verre de lunettes progressif présente un point de référence de conception pour la vision de loin et un point de référence de conception pour la vision de près, dans lequel

- le verre de lunettes progressif satisfait aux spécifications optiques suivantes :

(1) un effet dioptrique prescrit au point de référence de conception pour la vision de loin à l'intérieur des tolérances admissibles selon la norme DIN EN ISO 8980-2:2004 et un effet dioptrique prescrit au point de référence de conception pour la vision de près à l'intérieur des tolérances admissibles selon la norme DIN EN ISO 8980-2:2004,

(2) une augmentation monotone et continue de l'effet dioptrique entre le point de référence de conception pour la vision de loin et le point de référence de conception pour la vision de près sur une ligne de vision principale,

(3) un canal de progression qui est défini par le fait que l'astigmatisme résiduel se situe en-dessous d'une valeur comprise dans le groupe suivant

(a) 0,25 dioptrie
(b) 0,38 dioptrie
(c) 0,50 dioptrie,
**caractérisé en ce que**

(ii) dans le cas où la surface avant du verre de lunettes progressif présente une géométrie de surface de forme libre, la géométrie de surface de forme libre de la surface avant par rapport à un verre de lunettes progressif de comparaison présentant la même géométrie de surface arrière, la même courbe d'effet dioptrique et le même astigmatisme résiduel pour les chemins de rayons de lunettes passant par la ligne de vision principale et comportant un substrat constitué d'un matériau présentant un indice de réfraction ne variant pas dans l'espace, qui présente une valeur qui correspond à la valeur de l'indice de réfraction variant dans l'espace du matériau du substrat du verre de lunettes progressif au point de la ligne de vision principale, sur la surface avant, où le verre de lunettes progressif comportant le substrat constitué du matériau présentant un indice de réfraction variant dans l'espace subit la moitié de l'augmentation d'effet dioptrique totale, est modifiée, et la géométrie de surface de forme libre modifiée de la surface avant du verre de lunettes progressif et la variation dans l'espace de l'indice de réfraction sont adaptées l'une à l'autre de telle sorte que, pour ce verre de lunettes progressif, une première valeur, déterminée par calcul, de l'astigmatisme de surface de la surface avant au point par lequel passe le chemin de rayons correspondant du porteur de lunettes passant par l'endroit, sur la ligne de vision principale, où ce verre de lunettes progressif subit la moitié de l'augmentation d'effet moyenne totale, est supérieure à une deuxième valeur, déterminée par calcul, de l'astigmatisme de surface de la surface avant présentant une géométrie de surface de forme libre pour le verre de lunettes progressif de comparaison constitué d'un matériau présentant un indice de réfraction ne variant pas dans l'espace, au point où le chemin de rayons correspondant du porteur de lunettes passe par l'endroit, sur la ligne de vision principale, où ce verre de lunettes progressif de comparaison subit la moitié de l'augmentation d'effet moyenne totale, ou **en ce que**

(iii) dans le cas où la surface arrière du verre de lunettes progressif présente une géométrie de surface de forme libre, la géométrie de surface de forme libre de la surface arrière par rapport à un verre de lunettes progressif de comparaison présentant la même géométrie de surface avant, la même courbe d'effet dioptrique et le même astigmatisme résiduel pour les chemins de rayons du porteur de lunettes passant par la ligne de vision principale et comportant un substrat constitué d'un matériau présentant un indice de réfraction ne variant pas dans l'espace, qui présente une valeur qui correspond à la valeur de l'indice de réfraction variant dans l'espace du matériau du substrat du verre de lunettes progressif au point de la ligne de vision principale, sur la surface arrière, où le verre de lunettes progressif comportant le substrat constitué du matériau présentant un indice de réfraction variant dans l'espace subit la moitié de l'augmentation d'effet dioptrique totale, est modifiée, et la géométrie de surface de forme libre modifiée de la surface arrière du verre de lunettes progressif et la variation dans l'espace de l'indice de réfraction sont adaptées l'une à l'autre de telle sorte que, pour ce verre de lunettes progressif, une première valeur, déterminée par calcul, de l'astigmatisme de surface de la surface arrière au point par lequel passe le chemin de rayons correspondant du porteur de lunettes passant par l'endroit, sur la ligne de vision principale, où ce verre de lunettes progressif subit la moitié de l'augmentation d'effet moyenne totale, est supérieure à une deuxième valeur, déterminée par calcul, de l'astigmatisme de surface de la surface arrière présentant une géométrie de surface de forme libre pour le verre de lunettes progressif de comparaison constitué d'un matériau présentant un indice de réfraction ne variant pas dans l'espace, au point où le chemin de rayons correspondant du porteur de lunettes passe par l'endroit, sur la ligne de vision principale, où ce verre de lunettes progressif de comparaison subit la moitié de l'augmentation d'effet moyenne totale.

5. Article selon la revendication 3 ou 4, **caractérisé en ce que** la valeur du premier astigmatisme de surface calculé

    - est supérieure d'au moins 0,25 dioptrie à la valeur du deuxième astigmatisme de surface calculé ou
    - est supérieure d'au moins un tiers de la valeur de l'effet d'addition en vision de près à la valeur du deuxième astigmatisme de surface déterminé par calcul.

6. Article selon l'une des revendications 3 à 5, **caractérisé en ce que** la valeur du premier astigmatisme de surface déterminé par calcul n'est pas supérieure à la valeur du deuxième astigmatisme de surface déterminé par calcul seulement en un point, mais également dans une zone le long de la ligne de vision principale dans laquelle le verre de lunettes progressif et le verre de lunettes progressif de comparaison subissent un quart à trois quarts de l'augmentation d'effet dioptrique totale.

7. Procédé mis en œuvre par ordinateur pour la conception d'un verre de lunettes progressif, qui comprend un substrat présentant une surface avant et une surface arrière, qui est composé d'un matériau présentant un indice de réfraction variant dans l'espace, dont la surface avant et/ou dont la surface arrière présente(nt) une géométrie de surface de forme libre, qui présente un point de référence de conception pour la vision de loin et un point de référence de conception pour la vision de près et qui satisfait aux spécifications optiques suivantes :

    (1) un effet dioptrique prescrit au point de référence de conception pour la vision de loin se situe à l'intérieur des tolérances admissibles selon la norme DIN EN ISO 8980-2:2004 et un effet dioptrique prescrit au point de référence de conception pour la vision de près se situe à l'intérieur des tolérances admissibles selon la norme DIN EN ISO 8980-2:2004,
    (2) une augmentation monotone et continue de l'effet dioptrique prescrit entre le point de référence de conception pour la vision de loin et le point de référence de conception pour la vision de près se situe sur une ligne de vision principale,
    (3) il existe un canal de progression qui est défini par le fait que l'astigmatisme résiduel se situe en-dessous d'une valeur comprise dans le groupe suivant

        (a) 0,25 dioptrie
        (b) 0,38 dioptrie
        (c) 0,50 dioptrie
        **caractérisé en ce que**

        (i) la géométrie de surface de forme libre de la surface avant et/ou de la surface arrière du verre de lunettes progressif et la variation dans l'espace de l'indice de réfraction sont adaptées l'une à l'autre de telle sorte qu'un verre de lunettes progressif de comparaison présentant la même géométrie mais basé sur un substrat constitué d'un matériau présentant un indice de réfraction ne variant pas dans l'espace ne satisfait pas à au moins l'une des spécifications optiques (1) à (3) et que, par rapport au verre de lunettes progressif de comparaison, il existe une réduction de l'astigmatisme résiduel du côté du canal de progression de telle sorte que la largeur du canal de progression augmente, dans lequel cette largeur est définie par une restriction de l'astigmatisme résiduel se situant dans la plage comprise entre 0,25 dioptrie et 0,50 dioptrie.

8. Procédé mis en œuvre par ordinateur pour la conception d'un verre de lunettes progressif, qui comprend un substrat présentant une surface avant et une surface arrière, qui est composé d'un matériau présentant un indice de réfraction variant dans l'espace, dont la surface avant et/ou la surface arrière présente(nt) une géométrie de surface de forme libre, qui présente un point de référence de conception pour la vision de loin et un point de référence de conception pour la vision de près et qui satisfait aux spécifications optiques suivantes :

    (1) un effet dioptrique prescrit au point de référence de conception pour la vision de loin se situe à l'intérieur des tolérances admissibles selon la norme DIN EN ISO 8980-2:2004 et un effet dioptrique prescrit au point de référence de conception pour la vision de près se situe à l'intérieur des tolérances admissibles selon la norme DIN EN ISO 8980-2:2004,
    (2) une augmentation monotone et continue de l'effet dioptrique prescrit entre le point de référence de conception pour la vision de loin et le point de référence de conception pour la vision de près se situe sur une ligne de vision principale,
    (3) il existe un canal de progression qui est défini par le fait que l'astigmatisme résiduel se situe en-dessous d'une valeur comprise dans le groupe suivant

        (a) 0,25 dioptrie
        (b) 0,38 dioptrie
        (c) 0,50 dioptrie
        **caractérisé en ce que**

        (ii) la géométrie de surface de forme libre de la surface avant et/ou de la surface arrière du verre de lunettes progressif et la variation dans l'espace de l'indice de réfraction sont adaptées l'une à l'autre de telle sorte que, pour ce verre de lunettes progressif, une première valeur, déterminée par calcul, de l'astigmatisme de surface de la surface présentant la géométrie de surface de forme libre au point par lequel passe le chemin de rayons correspondant du porteur de lunettes passant par l'endroit, sur la ligne de vision principale, où ce verre de lunettes progressif subit la moitié de l'augmentation d'effet moyenne totale, est supérieure à une deuxième valeur, déterminée par calcul, de l'astigmatisme de surface de la surface présentant la géométrie de surface de forme libre pour un verre de lunettes progressif de comparaison constitué d'un matériau présentant un indice de réfraction ne variant pas dans l'espace, au point où le chemin de rayons correspondant du porteur de lunettes passe par l'endroit, sur la ligne de vision principale, où ce verre de lunettes progressif de comparaison subit la moitié de l'augmentation d'effet moyenne totale, et dans lequel le verre de lunettes progressif de comparaison présente une même position de la surface présentant la géométrie de surface de forme libre et une même géométrie de surface opposée, une même courbe d'effet dioptrique le long de la ligne de vision principale, et l'indice de réfraction présente une valeur qui correspond à la valeur de l'indice de réfraction du substrat au point de la ligne de vision principale, sur la surface avant, où le verre de lunettes progressif comportant le substrat constitué du matériau présentant un indice de réfraction variant dans l'espace subit la moitié de l'augmentation d'effet dioptrique totale.

9. Programme d'ordinateur comprenant un code de programme permettant d'exécuter toutes les étapes du procédé selon la revendication 7 ou 8, lorsque le programme d'ordinateur est chargé dans un ordinateur et/ou exécuté dans un ordinateur.

10. Support lisible par ordinateur contenant un programme d'ordinateur selon la revendication 9.

11. Procédé de fabrication par un procédé additif d'un verre de lunettes progressif conçu conformément à un procédé selon la revendication 7 ou 8.

12. Ordinateur comprenant un processeur et une mémoire dans laquelle est stocké un programme d'ordinateur selon la revendication 9 et qui est conçu pour mettre en œuvre un procédé selon la revendication 7 ou 8.

$\triangle Cyl \approx 2x \; \triangle Add$

$\triangle Add$

$\triangle Cyl$

0.50
1.00
1.50
2.00

+0.50

+1.00

N

**Fig. 1**

**(Stand der Technik)**

Fig. 2a

Fig. 2b

Fig. 2c

Fig. 2d

Fig. 3a

Fig. 3b

Fig. 3c

**Fig. 3d**

**Fig. 3e**

**Zernike-Koeffizienten**

**Fig. 3f**

**Fig. 4a**

**Fig. 4b**

EP 3 824 343 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 8904986 A1
- WO 9913361 A1
- US 2010238400 A1
- EP 2177943 A1

### In der Beschreibung aufgeführte Nicht-Patentliteratur

- **MINKWITZ, G.** Über den Flächenastigmatismus bei gewissen symmetrischen Asphären. *Optica Acta,* Juli 1963, vol. 10 (3), 223-227
- **DIEPES H. ; BLENDOWSKE R.** Optik und Technik der Brille. 2005, 256
- **DIEPES H. ; BLENDOWSKE R.** *Optik und Technik der Brille,* 2005, 257
- **YUKI SHITANOKI et al.** Application of Graded-Index for Astigmatism Reduction in Progressive Addition Lens. *Applied Physics Express,* 01. Marz 2009, vol. 2